# EUROPEAN PATENT APPLICATION

(11) **EP 1 608 144 A1**
(43) Date of publication of application: **21.12.2005**
(21) Application number: 04724139.3
(22) Date of filing: 29.03.2004
(51) Int. Cl.: H04N 1/40, B41J 3/00

(54) **IMAGE OUTPUT CONTROL SYSTEM, IMAGE OUTPUT DEVICE, AND IMAGE PROCESSING DEVICE**

(30) Priority: 27.03.2003 JP 2003087176; 12.03.2004 JP 2004071021
(71) Applicant: SEIKO EPSON CORPORATION, Tokyo 160-0811 (JP)
(72) Inventor: KAKUTANI, Toshiaki Seiko Epson Corporation, Suwa-shi Nagano 3928502 (JP)
(74) Representative: Winter, Brandl, Fürniss, Hübner Röss, Kaiser, Polte Partnerschaft Patent- und Rechtsanwaltskanzlei
(86) International application number: PCT/JP2004/004478
(87) International publication number: WO 2004/086750

(57) **Abstract**

The technique of the invention ensures high-speed output of an image including a large number of pixels. In an image output control system of the invention, an image processing device makes image data subjected to a preset series of image processing and supplies processed image data to an image output device to output a resulting processed image. The image processing device collects a predetermined number of plural pixels among a large number of pixels constituting the image to one pixel group, specifies number of dots to be created in the pixel group, and outputs dot number data representing the specified number of dots to be created in the pixel group to the image output device. The image output device stores multiple priority orders of pixels for dot formation in each pixel group. The image output device receives the output dot number data, selects one priority order among the stored multiple priority orders, determines position of each dot-on pixel in each pixel group, and actually creates a dot at the determined position of each dot-on pixel, so as to output a resulting image. In the image output control system of the invention, the image processing device supplies the dot number data to the image output device. Even when an image includes a large number of pixels, this arrangement ensures quick data supply and thereby high-speed image output.

## Description

### Technical Field

The present invention relates to a technique of making image data subjected to a preset series of image processing and outputting a processed image. More specifically the invention pertains to a technique of quickly transferring processed image data to an image output device, so as to attain high-speed image output.

### Background Art

Image output devices that create dots on various output media, for example, printing media and liquid crystal screens, to express an image are widely used as the output device of diverse imaging equipment. The image output device divides an image into a number of small elements called pixels and creates dots in these pixels. Each pixel takes only either of two states, that is, a dot-on state and a dot-off state. The image as a whole may have areas of dense dot formation and areas of sparse dot formation. Each image is thus expressed by varying the dot formation density. For example, in the case of formation of dots with black ink on white printing paper, the areas of dense dot formation express dark areas, whereas the areas of sparse dot formation express bright areas. As another example, in the case of formation of luminescent spots as dots on a liquid crystal screen, the areas of dense dot formation express bright areas, whereas the areas of sparse dot formation express dark areas. Adequate regulation of the dot formation density enables output of a multi-tone image.

Control data of the dot formation density is obtained by a preset series of image processing of object image data, which represents an object image to be output. The image-processed data is supplied to the image output device, which then creates dots in pixels specified by the supplied data. Dots are accordingly created at adequate densities on an output medium to express a resulting image.

The higher picture quality and the larger size of output images have been demanded for such image output devices. One effective measure to the better-quality demand divides an image into smaller pixels. Size reduction of pixels makes dots created in these small pixels inconspicuous and thereby enhances the picture quality of a resulting image (see, for example, Japanese Patent Laid-Open Gazette No. 2000-115716). The size expansion demand is fulfilled, on the other hand, by increasing the total number of pixels. Size expansion of individual pixels naturally expands the size of an output image, but undesirably lowers the picture quality of the output image. The effective measure to the size expansion demand thus increases the total number of pixels.

These measures to the better-quality demand and the size expansion demand of the output image, however, hinder high-speed image output. Let alone the increased number of pixels for the size expansion of the output image, the size reduction of individual pixels for the enhanced picture quality of the output image results in increasing the total number of pixels included in one image. As mentioned above, the image output device receives control data of dot formation and outputs an image according to the received control data. The increase in number of pixels included in one image thus undesirably extends the time required for data supply and interferes with high-speed image output.

### Disclosure of the Invention

In view of the drawbacks of the prior art techniques, the object of the invention is to provide a technique of accelerating supply of control data for dot formation to an image output device and thereby attaining high-speed image output.

In order to attain at least part of the above and the other related objects, the present invention is directed to a first image output control system having an image processing device that makes image data subjected to a preset series of image processing, and an image output device that creates dots according to a result of the preset series of image processing to output an image.
The image processing device includes: a dot number specification module that collects a predetermined number of plural pixels, among a large number of pixels constituting the image, to each pixel group and specifies number of dots to be created in each pixel group according to the image data; and a number data supply module that supplies dot number data representing the number of dots specified with regard to each pixel group to the image output device.
The image output device includes: a number data receiving module that receives the dot number data with regard to each pixel group; a priority order selection module that selects a priority order of pixels for dot formation in each pixel group; a pixel position determination module that determines position of each dot-on pixel included in each pixel group, based on the received dot number data and the selected priority order; and a dot formation module that actually creates a dot at the determined position of each dot-on pixel.

There is a first image output control method corresponding to the first image output control system described above. The present invention is thus directed to an image output control method that makes image data subjected to a preset series of image processing and creates dots according to a result of the preset series of image processing to output an image.
The image output control method includes: a first step of collecting a predetermined number of plural pixels, among a large number of pixels constituting the image, to each pixel group and specifying number of dots to be created in each pixel group according to the image data; a second step of selecting a priority order of pixels for dot formation in each pixel group; a third step of determining position of each dot-on pixel included in each pixel group, based on the specified number of dots and the selected priority order of the pixel group; and a fourth step of actually creating a dot at the determined position of each dot-on pixel.

The image output control system and the corresponding image output control method of the invention generate dot number data representing the number of dots to be created in each pixel group, which consists of plural pixels, while selecting a priority order of pixels for dot formation in each pixel group. The positions of dot-on pixels in each pixel group are determined, based on the selected priority order and the generated dot number data of the pixel group. Dots are actually created at the determined positions of the dot-on pixels.

The dot number data representing the number of dots to be created in each pixel group occupies a significantly smaller data capacity, compared with the dot on-off state data representing the dot on-off state of individual pixels included in each pixel group. Conversion of the image data into the dot number data of respective pixel groups thus reduces the required volume of data transfer and attains quick data transfer. Even when an object image has a large number of pixels, this arrangement completes data transfer within a short time period and thus enables high-speed image output.

The positions of dot-on pixels in each pixel group are determined, based on the dot number data and the selected priority order of pixels, that is, the priority order of dot formation in respective pixels included in each pixel group. The priority order applied to determination of the positions of dot-on pixels is selected for each pixel group. Even when identical dot number data are generated for a sequence of adjacent pixel groups, this technique enables dots to be created at different pixel positions in the respective pixel groups. This avoids dot formation in a regular pattern and thereby prevents deterioration of the picture quality of a resulting image.

One preferable technique encodes the dot number data and supplies the encoded dot number data. The encoded dot number data is decoded to the number of dots to be created in each pixel group, prior to the determination of the dot-on pixel positions. This encoding technique desirably reduces the volume of the dot number data and ensures efficient data transfer, thus enabling high-speed image output.

In the first image output control system and the corresponding first image output control method, one preferable technique refers to a dither matrix, which maps threshold values to respective pixels arranged in a two-dimensional array, and specifies the number of dots to be created in each pixel group. The technique divides the dither matrix referred to for the dot number specification into multiple groups corresponding to multiple pixel groups, specifies a priority order of pixels in each pixel group based on a result of comparison between the image data of respective pixels included in the pixel group and corresponding threshold values, and stores the specified priority orders of the multiple pixel groups. The embodiment then selects one priority order corresponding to a position of each pixel group in the image among the multiple priority orders, and determines the positions of dot-on pixels based on the selected priority order and the specified number of dots.

Application of the dither matrix enables quick specification of the number of dots to be created in each pixel group. The priority order used for determination of the positions of dot-on pixels may be set corresponding to a matrix identical with the dither matrix used for specification of the number of dots. The dot-on pixel position determination process is then consistent with the dot number specification process. This ensures adequate determination of the positions of dot-on pixels and results in outputting a high-quality image. Diversity of matrices including variance matrices, dense matrices, blue noise matrix, and gray noise matrix may be adopted for the dither matrix of this invention. The resulting dots created have the characteristics of the adopted matrix.

The invention is also directed to a second image output control system having an image processing device that makes image data subjected to a preset series of image processing and an image output device that creates dots according to a result of the preset series of image processing to output an image.
The image processing device includes: a pixel group setting module that collects plural pixels among a large number of pixels constituting the image to each pixel group; a dot number specification module that causes at least a plurality of the pixel groups to have different relations between the image data of each pixel group and number of dots to be created in the pixel group, and specifies number of dots to be created in each pixel group according to the image data of the pixel group; and a number data supply module that supplies dot number data representing the number of dots specified with regard to each pixel group as the control data to the image output device.
The image output device includes: a number data receiving module that receives the dot number data with regard to each pixel group; a pixel position determination module that determines position of each dot-on pixel in each pixel group, based on the received dot number data; and a dot formation module that actually creates a dot at the determined position of each dot-on pixel.

In the second image output control system of the invention, the image processing device specifies the different numbers of dots to be created in at least plural pixel group. This desirably reduces the potential of dot formation in a regular pattern. A second image output control method corresponding to the second image output control system exerts the similar functions and effects.

Another application to attain the object of the invention is an image output device that receives processed image data, which has gone through a preset series of image processing, and creates dots according to the received image data to output an image. The image output device includes: a number data receiving module that receives dot number data representing number of dots to be created in each pixel group, as the image data, where the pixel group includes a predetermined number of plural pixels collected among a large number of pixels constituting the image; a priority order selection module that selects a priority order of pixels for dot formation in each pixel group; a pixel position determination module that determines position of each dot-on pixel included in each pixel group, based on the received dot number data and the selected priority order; and a dot formation module that actually creates a dot at the determined position of each dot-on pixel.

There is an image output method corresponding to the image output device described above. The present invention is thus directed to an image output method that receives processed image data, which has gone through a preset series of image processing, and creates dots according to the received image data to output an image.
The image output method includes the steps of: (A) receiving dot number data representing number of dots to be created in each pixel group, as the image data, where the pixel group includes a predetermined number of plural pixels collected among a large number of pixels constituting the image; (B) selecting a priority order of pixels for dot formation in each pixel group; (C) determining position of each dot-on pixel included in each pixel group, based on the received dot number data and the selected priority order; and (D) actually creating a dot at the determined position of each dot-on pixel.

The image output device and the corresponding image output method of the invention receive the dot number data representing the number of dots to be created in each pixel group, determine the positions of dot-on pixels in each pixel group according to the received dot number data, and actually create dots at the determined positions of the dot-on pixels to output a resulting image.

As described above, the dot number data representing the number of dots to be created in each pixel group occupies a significantly smaller data capacity, compared with the dot on-off state data representing the dot on-off state of individual pixels included in each pixel group. Even when an object image has a large number of pixels, the above image output technique ensures quick data reception and resulting high-speed image output.

The priority order applied to determination of the positions of dot-on pixels is selected for each pixel group. Even when identical dot number data are generated for a sequence of adjacent pixel groups, this technique enables dots to be created at different pixel positions in the respective pixel groups. This avoids dot formation in a regular pattern and thereby prevents deterioration of the picture quality of a resulting image.

One preferable technique receives encoded dot number data, decodes the encoded dot number data to the number of dots to be created in each pixel group, and determines the positions of dot-on pixels. This encoding technique desirably reduces the volume of the dot number data and ensures efficient data reception, thus enabling high-speed image output.

In the image output device and the corresponding image output method, plural pixels that are adjacent to one another and have a preset positional relation may be gathered to one pixel group.
Such adjacency is not essential. Collection of plural adjacent pixels of the preset positional relation, however, desirably simplifies the process of specifying the number of dots to be created in each pixel group and the process of determining the positions of dot-on pixels in the pixel group.

In the image output device and the corresponding image output method of the invention, one preferable technique stores multiple priority orders in the form of a priority order matrix that arranges the multiple priority orders in a preset two-dimensional array. The technique selects one priority order corresponding to a position of each pixel group in the image among the multiple priority orders stored in the priority order matrix and determines the positions of dot-on pixels according to the selected priority order.

The arrangement of multiple priority orders in an adequate sequence in the priority order matrix gives adequately determined positions of dot-on pixels over plural pixel groups. This ensures the improved dot distribution and high-quality image output.

The priority order matrix may be set based on the dither matrix. The procedure divides the dither matrix into multiple groups corresponding to the multiple pixel groups. The threshold values of the dither matrix are mapped to the respective pixels in each pixel group. The priority order of pixels in each pixel group is specified based on a result of comparison between the image data of respective pixels included in the pixel group and corresponding threshold values.

The threshold values in the dither matrix are set to give an adequate dot distribution. Application of the priority order matrix set based on the dither matrix thus ensures the improved dot distribution and high-quality image output.

One preferable process of determining the positions of dot-on pixels in each pixel group specifies a priority number of each pixel for dot formation in each pixel group according to the selected priority order. The process detects the positions of dot-on pixels in the pixel group, based on comparison between the dot number data of the pixel group and the priority numbers of the respective pixels in the pixel group.

Simple comparison between the priority number of a pixel and the dot number data readily determines dot formation or no-dot formation in the pixel. For example, it is assumed that N dots are to be created in one pixel group and that the smaller priority number represents the higher potential for dot formation. Dots are then created in the pixels having priority number 1 to priority number N. Detection of the pixels having the priority numbers of not greater than the specified dot number thus readily determines the positions of dot-on pixels.

Another preferable process of determining the positions of dot-on pixels in each pixel group generates intermediate data from the dot number data of one pixel group, where the pixel group consists of N pixels, the number of dots to be created in the pixel group is equal to M, and the intermediate data of the pixel group includes M consecutive data elements representing dot formation and (N-M) consecutive data elements representing no dot formation. The process specifies a priority number of each pixel for dot formation in the pixel group according to the selected priority order and reads a relevant data element of the intermediate data corresponding to the priority number of each pixel in the pixel group, so as to detect the position of each dot-on pixel in the pixel group.

Formation or no-dot formation in each pixel is readily determined by simply reading the relevant data element of the intermediate data corresponding to the priority number of the pixel. This technique thus ensures quick determination of the positions of dot-on pixels.

One preferable procedure of reading the relevant data element from the intermediate data shifts the intermediate data by a number of data elements corresponding to the priority number of each pixel in a direction of the data elements representing dot formation and reads a data element at an end of the shifted intermediate data as the relevant data element.

The shift of the intermediate data in this manner fixes the position of reading the relevant data element to the end of the intermediate data and thus desirably simplifies the data reading process.

Still another application to attain the object of the invention is a first image processing device that causes input image data representing an image to go through a preset series of image processing and thereby generates control data, which is used for control of dot formation by an image output device that creates dots and outputs a resulting processed image.
The first image processing device includes: a pixel group setting module that collects plural pixels among a large number of pixels constituting the image to each pixel group; a dot number specification module that causes at least a plurality of the pixel groups to have different relations between the image data of each pixel group and number of dots to be created in the pixel group, and specifies number of dots to be created in each pixel group according to the image data of the pixel group; and a number data supply module that supplies dot number data representing the number of dots specified with regard to each pixel group as the control data to the image output device.

There is a first image processing method corresponding to the first image processing device described above. The invention is thus directed to an image processing method that causes input image data representing an image to go through a preset series of image processing and thereby generates control data, which is used for control of dot formation by an image output device that creates dots and outputs a resulting processed image.
The image processing method includes the steps of: (a) collecting plural pixels among a large number of pixels constituting the image to each pixel group; (b) causing at least a plurality of the pixel groups to have different relations between the image data of each pixel group and number of dots to be created in the pixel group, and specifying number of dots to be created in each pixel group according to the image data of the pixel group; and (c) supplying dot number data representing the number of dots specified with regard to each pixel group as the control data to the image output device.

The first image processing device and the corresponding first image processing method of the invention output different dot number data even when identical image data continue over plural pixel groups. This arrangement prevents dot formation at identical pixel positions over plural pixel groups, thus effectively avoiding deterioration of the picture quality due to dot formation in a regular pattern.

The dot number data representing the number of dots to be created in each pixel group occupies a significantly smaller data capacity, compared with the dot on-off state data representing the dot on-off state of individual pixels included in each pixel group. Even when an object image has a large number of pixels, this technique ensures quick data transfer to the image output device and resulting high-speed image output.

One preferable technique compares the image data of respective pixels in each pixel group and plural threshold values corresponding to the number of pixels in one pixel group and specifies the number of dots to be created in the pixel group based on a result of the comparison. The plural threshold values may be arranged in a matrix in the same sequence as the pixels of each pixel group or may be given as a simple set or numeral sequence.

Preparation of multiple different sets of threshold values ensures easy and adequate specification of the number of dots to be created in each pixel group.

One preferable technique supplies encoded dot number data as the control data. This encoding technique desirably reduces the volume of the dot number data and ensures efficient supply of the control data.

In the image processing device and the corresponding image processing method of the invention, one preferable technique divides the image into multiple pixel groups by collecting the predetermined number of plural pixels to each pixel group, and specifies the number of dots to be created in each pixel group according to the image data of respective pixels included in the pixel group.

One available method may first determine and store the dot on-off state of individual pixels and then specify the number of dots to be created in each pixel group based on the stored dot on-off state of the respective pixels. The technique of dividing an image into multiple pixel groups and specifying the number of dots to be created in each pixel group according to the image data of each pixel group, however, does not require storage of the determined dot on-off state with regard to a large number of pixels and thus desirably saves the storage capacity.

In the first image processing device and the corresponding first image processing method of the invention, various techniques may be applied to cause the plural pixel groups to have different relations between the image data of each pixel group and the number of dots to be created in the pixel group. One preferable technique specifies the number of dots to be created in each pixel group, such that tone errors relative to the image data caused by the dot number specification are cancelled each other between at least plural pixel groups within a preset range. Such cancellation may be attained by addition of an adequate noise to the image data or by any other suitable method. Specification of the dot number according to the dither matrix also effectively cancels the potential tone errors.

The cancellation of the tone errors between at least pixel groups in the preset range desirably reduces the total tone error and thus improves the output picture quality.

Another application to attain the object of the invention is a second image processing device that causes input image data representing an image to go through a preset series of image processing and thereby generates control data, which is used for control of dot formation by an image output device that creates dots and outputs a resulting processed image.
The second image processing device includes: a dither matrix storage module that stores a dither matrix, which maps threshold values to respective pixels arranged in a two-dimensional array; a pixel group setting module that collects a predetermined number of plural pixels, among a large number of pixels constituting the image, to each pixel group; a dot number specification module that compares the image data of respective pixels included in each pixel group with threshold values set at corresponding positions in the dither matrix, so as to specify number of dots to be created in the pixel group; and a number data supply module that supplies dot number data representing the number of dots specified with regard to each pixel group as the control data to the image output device.

Comparison between the image data and the corresponding threshold values in the dither matrix adequately specifies the number of dots to be created in each pixel group. This arrangement thus ensures high-quality image output.

The technique of the invention may be actualized by programs that are executed by the computer to attain the image output control method, the image output method, and the image processing method described above, as well as by recording media in which such programs are recorded.
One application of the invention is a program corresponding to the image output control method discussed above. The present invention is thus directed to an image output control program that is executed by a computer to make image data subjected to a preset series of image processing, create dots according to a result of the preset series of image processing, and thereby output an image. The image output control program causes the computer to attain: a first function of collecting a predetermined number of plural pixels, among a large number of pixels constituting the image, to each pixel group and specifying number of dots to be created in each pixel group according to the image data; a second function of selecting a priority order of pixels for dot formation in each pixel group; a third function of determining position of each dot-on pixel included in each pixel group, based on the specified number of dots and the selected priority order of the pixel group; and a fourth function of actually creating a dot at the determined position of each dot-on pixel.

In one preferable embodiment of the image output control program, the first function refers to a dither matrix, which maps threshold values to respective pixels arranged in a two-dimensional array, and specifies the number of dots to be created in each pixel group. The second function divides the dither matrix referred to for the dot number specification into multiple groups corresponding to multiple pixel groups, specifies a priority order of pixels in each pixel group based on a result of comparison between the image data of respective pixels included in the pixel group and corresponding threshold values, and stores the specified priority orders of the multiple pixel groups. The second function selects one priority order corresponding to a position of each pixel group in the image, among multiple priority orders stored with regard to the multiple groups of the dither matrix.

Another application of the invention is a program corresponding to the image output method discussed above. The present invention is thus directed to an image output program that is executed by a computer to receive processed image data, which has gone through a preset series of image processing, create dots according to the received image data, and thereby output an image. The image output program causes the computer to attain the functions of: (A) receiving dot number data representing number of dots to be created in each pixel group, as the image data, where the pixel group includes a predetermined number of plural pixels collected among a large number of pixels constituting the image; (B) selecting a priority order of pixels for dot formation in each pixel group; (C) determining position of each dot-on pixel included in each pixel group, based on the received dot number data and the selected priority order; and (D) actually creating a dot at the determined position of each dot-on pixel.

Still another application of the invention is a program corresponding to the image processing method discussed above. The present invention is thus directed to an image processing program that is executed by a computer to make input image data representing an image subjected to a preset series of image processing and thereby generate control data, which is used for control of dot formation by an image output device that creates dots and outputs a resulting processed image. The image processing program causes the computer to attain the functions of: (a) collecting plural pixels among a large number of pixels constituting the image to each pixel group; (b) causing at least a plurality of the pixel groups to have different relations between the image data of each pixel group and number of dots to be created in the pixel group, and specifying number of dots to be created in each pixel group according to the image data of the pixel group; and (c) supplying dot number data representing the number of dots specified with regard to each pixel group as the control data to the image output device.

The technique of the invention may also be actualized by recording media in which such programs are recorded in a computer readable manner.

The computer reads any of such programs, which may be recorded in the recording media, to attain the various functions described above. This ensures high-speed image output even when an object image has a large number of pixels.

### Brief Description of the Drawings

Fig. 1 schematically illustrates a printing system to explain the general outline of the invention;
Fig. 2 illustrates the configuration of a computer as an image processing device of an embodiment;
Fig. 3 schematically illustrates the structure of a printer as an image output device of the embodiment;
Fig. 4 shows an arrangement of nozzles Nz on respective ink ejection heads;
Fig. 5 is a flowchart showing an image printing routine executed by the image processing device of a first embodiment;
Figs. 6(a) and 6(b) show resolution conversion of image data;
Fig. 7 is a flowchart showing the details of a number data generation process executed in the first embodiment;
Fig. 8 shows part of a dither matrix;
Fig. 9 shows a process of determining dot on-off state of individual pixels by referring to the dither matrix;
Figs. 10(a) and 10(b) conceptually show a process of generating dot number data with regard to each pixel group;
Fig. 11 is a flowchart showing the details of a pixel position determination process executed in the first embodiment;
Figs. 12(a) through 12(d) show a process of determining the positions of dot-on pixels according to the dot number data in the pixel position determination process of the first embodiment;
Figs. 13(a) through 13(c) show a process of generating dot number data in a number data generation process of a first modified example of the first embodiment;
Figs. 14(a) through 14(c) show a process of generating dot number data in a number data generation process of a second modified example of the first embodiment;
Fig. 15 is a flowchart showing a pixel position determination process of the second modified example;
Fig. 16 is a flowchart showing the details of a number data generation process executed in a second embodiment;
Figs. 17(a) and 17(b) show replacement of tone values of individual pixels included in one pixel group with a mean tone value according to the presence or the absence of an edge in the pixel group;
Figs. 18(a) through 18(c) show data formats output from the computer in the second embodiment;
Fig. 19 shows another data format output from the computer in the second embodiment;
Fig. 20 is a flowchart showing the details of a pixel position determination process executed in the second embodiment;
Fig. 21 is a flowchart showing an image printing routine executed in a third embodiment;
Fig. 22 conceptually shows a conversion table referred to in a conversion process to large-size, medium-size, and small-size dot data in the third embodiment;
Figs. 23(a) and 23(b) show a process of generating dot number data from dot data in a number data generation process of the third embodiment;
Fig. 24 is a flowchart showing the details of the number data generation process executed in the third embodiment;
Fig. 25 shows a process of determining the positions of dot-on pixels of respective size dots by referring to the dither matrix;
Fig. 26 conceptually shows a conversion table referred to for encoding dot number data of the respective size dots;
Fig. 27 conceptually shows a process of determining the numbers of the respective size dots without specification of dot-on pixel positions in the number data generation process of the third embodiment;
Fig. 28 is a flowchart showing the details of a pixel position determination process executed in the third embodiment;
Fig. 29 shows a process of determining the positions of dot-on pixels of the respective size dots according to the dot number data in the pixel position determination process of the third embodiment;
Fig. 30 conceptually shows a decoding table referred to in a pixel position determination process of a first modified example of the third embodiment;
Fig. 31 is a flowchart showing the details of a pixel position determination process in the first modified example of the third embodiment;
Fig. 32 is a flowchart showing the details of a pixel position determination process in a second modified example of the third embodiment;
Fig. 33 conceptually shows a decoding table referred to in the pixel position determination process of the second modified example of the third embodiment;
Figs. 34(a) through 34(c) conceptually show a process of specifying the dot type based on intermediate data in the pixel position determination process of the second modified example of the third embodiment;
Fig. 35 is a flowchart showing the details of a number data generation process executed in an image printing process of a first modified example;
Fig. 36 shows a process of unequivocally determining the numbers of respective size dots according to a mean tone value in each pixel group;
Fig. 37 is a flowchart showing the details of a number data generation process executed in an image printing process of a second modified example;
Fig. 38 is a flowchart showing the details of a pixel position determination process executed in an image printing process of a third modified example; and
Fig. 39 shows storage of multiple priority orders for individual pixels included in each pixel group.

### Best Modes of Carrying Out the Invention

Some modes of carrying out the invention are discussed below as preferred embodiments in the following sequence to describe the objects, features, aspects, and advantages of the present invention more apparently:
Some modes of carrying out the invention are discussed below as preferred embodiments in the following sequence to describe the objects, features, aspects, and advantages of the present invention more apparently.
   A. General Outline of System
   B. First Embodiment
      B-1. System Configuration
      B-2. Schema of Image Printing Process
      B-3. Number Data Generation Process in First Embodiment
      B-4. Pixel Position Determination Process in First Embodiment
      B-5. Modified Examples
   C. Second Embodiment
      C-1. Number Data Generation Process in Second Embodiment
      C-2. Pixel Position Determination Process in Second Embodiment
   D. Third Embodiment
      D-1. Schema of Image Printing Process in Third Embodiment
      D-2. Number Data Generation Process in Third Embodiment
      D-3. Pixel Position Determination Process in Third Embodiment
      D-4. Modified Examples
   E. Modifications

### A. General Outline of System

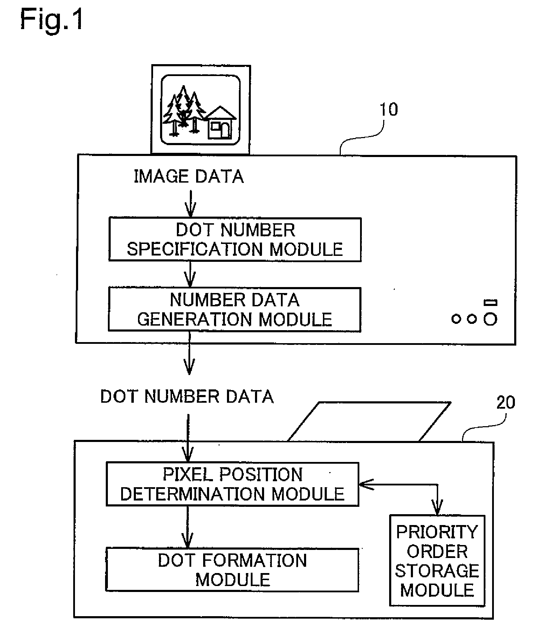

The general outline of a system embodying the invention is described with reference to Fig. 1, prior to detailed description of respective embodiments. Fig. 1 schematically illustrates the configuration of a printing system as one mode of an image output control system of the invention. The printing system includes a computer 10 as an image processing device and a printer 20 as an image output device. The computer 10 loads and executes preset programs and works in combination with the printer 20 as the integral printing system. The printer 20 creates dots on a printing medium to print an image. The computer 10 makes image data, which represent an object image to be printed, subjected to a preset series of image processing to generate and supply control data to the printer 20, which then controls dot formation in respective pixels according to the received control data.

In a general printing system, the computer converts image data into dot on-off state data representing the dot on-off state in respective pixels constituting an object image and supplies the dot on-off state data to the printer. The printer creates dots according to the received dot on-off state data to complete a printed image. An increasing number of pixels included in an object image to be printed naturally leads to an increasing volume of the dot on-off state data of the respective pixels. The increased data volume undesirably extends the time required for data transfer from the computer to the printer and thereby the total printing time. In the printing system 10 of Fig. 1, the computer 10 accordingly has a dot number specification module and a number data generation module to execute the following series of processing.

The dot number specification module collects a predetermined number of plural pixels, among a large number of pixels constituting the image, to each pixel group and specifies the number of dots to be created in each pixel group according to image data. The dot number data in each pixel group is generated by dividing image data into pixel groups and determining the dot on-off state in each of the pixel groups. Another applicable procedure may convert image data into data representing the dot on-off state, collect every predetermined number of multiple pixels to one pixel group, and determine the number of dots to be created in each pixel group. The predetermined number of multiple pixels collected to one pixel group may not be mutually adjacent pixels. The number data generation module sends the dot number data generated with respect to each of the pixel groups to the printer 20.

The printer 20 shown in Fig. 1 has a priority order storage module, a pixel position determination module, and a dot formation module. The priority order storage module stores multiple options for the priority order of pixels in each pixel group to create dots therein. The pixel position determination module refers to the priority order storage module and determines the positions of dot-on pixels, where dots are to be created, in each pixel group. A concrete procedure of the pixel position determination receives dot number data with respect to one pixel group and chooses one from the multiple options for the priority order of pixels stored in the priority order storage module. The procedure then selects a certain number of pixels specified by the dot number data as dot-on pixels according to the chosen priority order, among the predetermined number of multiple pixels included in the pixel group. In this manner, the pixel position determination module receives the dot number data, chooses the priority order of pixels in each pixel group, and determines the positions of dot-on pixels. The dot formation module actually creates dots in the dot-on pixels thus determined. A resulting image is accordingly recorded on a printing medium.

In the printing system of Fig. 1, the computer 10 supplies the dot number data representing the number of dots to be created in each pixel group, instead of the dot on-off state data of individual pixels, to the printer 20. This arrangement desirably reduces the total volume of data supply, compared with the structure of supplying the dot on-off state data of individual pixels. Even when an image includes a large number of pixels, this arrangement ensures quick data supply from the computer 10 to the printer 20 and thereby enables high-speed printing of a resulting image. Several embodiments of this printing system are discussed below.

### B. First Embodiment

### B-1. System Configuration

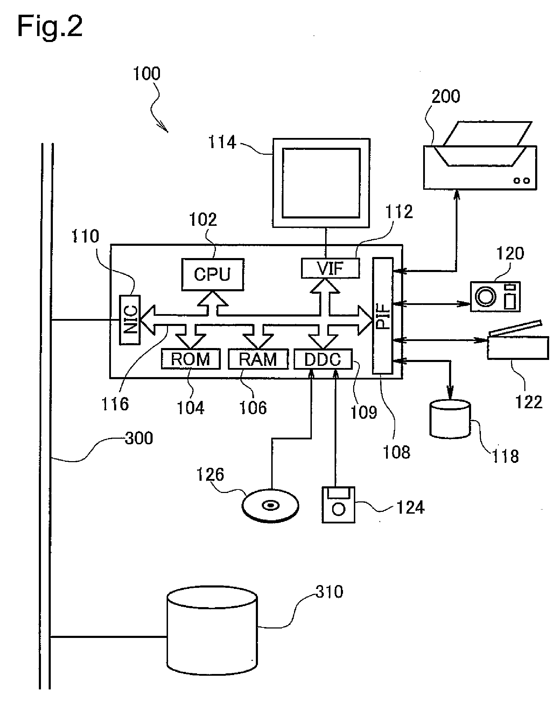

Fig. 2 illustrates the configuration of a computer 100 as an image processing device in a first embodiment. The computer 100 is a known computer including a CPU 102, a ROM 104, and a RAM 106 interconnected via a bus 116.

The computer 100 has a disk controller DDC 109 to read data from, for example, a flexible disk 124 or a compact disc 126, a peripheral equipment interface PIF 108 to receive and send data from and to peripheral equipment, and a video interface VIF 112 to drive and actuate a CRT 114. The PIF 108 is connected with a color printer 200 described later and a hard disk unit 118. Connection of a digital camera 120 or a color scanner 122 with the PIF 108 enables printing of images taken by the digital camera 120 or the color scanner 122. Insertion of a network interface card NIC 110 to the computer 100 causes the computer 100 to connect with a communication line 300 and obtain data stored in a storage device 310 linked to the communication line 300.

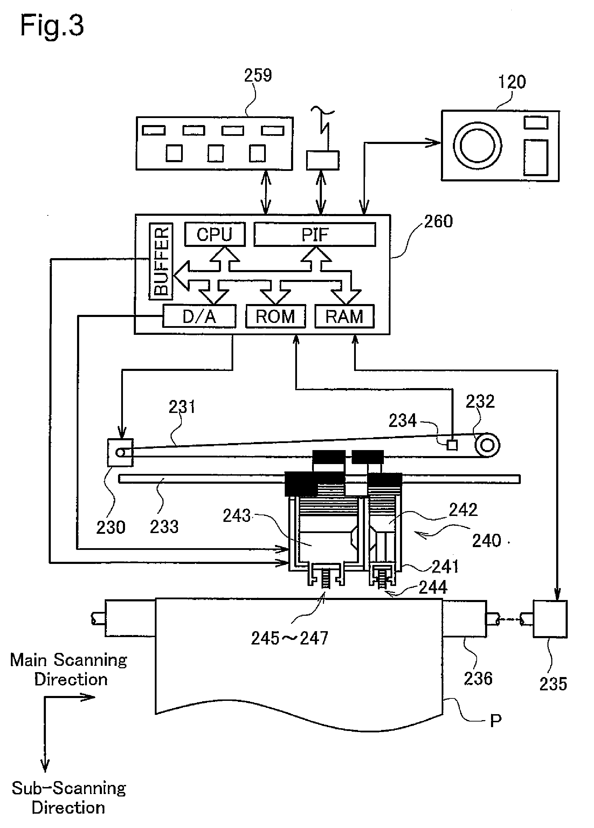

Fig. 3 schematically illustrates the structure of the color printer 200 in this embodiment. The color printer 200 is an inkjet printer that is capable of creating dots of four color inks, cyan, magenta, yellow, and black. The inkjet printer may be capable of creating dots of six color inks, cyan ink of a lower dye density (light cyan ink) and magenta ink of a lower dye density (light magenta ink), in addition to the above four color inks. In the description below, cyan ink, magenta ink, yellow ink, black ink, light cyan ink, and light magenta ink may be expressed simply as C ink, M ink, Y ink, K ink, LC ink, and LM ink, respectively.

As illustrated, the color printer 200 has a mechanism of actuating a print head 241 mounted on a carriage 240 to eject inks and create dots, a mechanism of activating a carriage motor 230 to move the carriage 240 back and forth along a shaft of a platen 236, a mechanism of activating a paper feed motor 235 to feed printing paper P, and a control circuit 260 that controls the formation of dots, the shift of the carriage 240, and the feed of the printing paper P.

An ink cartridge 242 for storing the K ink and an ink cartridge 243 for storing the C, M, and Y inks are attached to the carriage 240. The respective inks in the ink cartridges 242 and 243 attached to the carriage 240 are supplied through non-illustrated ink conduits to corresponding ink ejection heads 244 through 247 of the respective colors formed on the bottom face of the print head 241.

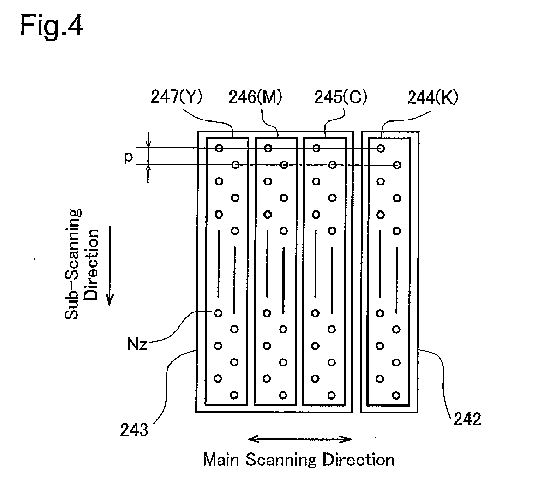

Fig. 4 shows an arrangement of inkjet nozzles Nz on the respective ink ejection heads 244 through 247. Four nozzle arrays for ejecting the C, M, Y, and K color inks are formed on the bottom face of the respective ink ejection heads 244 through 247. Each nozzle array includes 48 nozzles Nz arranged at a fixed nozzle pitch 'k'.

The control circuit 260 includes a CPU, a ROM, and a RAM interconnected via a bus. The control circuit 260 controls the operations of the carriage motor 230 and the paper feed motor 235 to regulate main scans and sub-scans of the carriage 240, while controlling ejection of ink droplets from the respective nozzles at adequate timings according to print data supplied from the computer 100. The color printer 200 creates ink dots of the respective colors at adequate positions on a printing medium under control of the control circuit 260 and thereby prints a resulting color image.

Any of diverse methods may be applied to eject ink droplets from the ink ejection heads of the respective colors. Typical examples of the available technique include a method that uses piezoelectric elements for ejection of ink droplets and a method that uses heaters located in respective ink conduits to generate bubbles in the ink conduits for ejection of ink droplets. The technique of the invention is also applicable to printers that take advantage of thermal transfer to create ink dots on a printing medium and printers that take advantage of static electricity to make toners of respective colors adhere to a printing medium, in addition to the inkjet printers.

In the color printer 200 having the hardware configuration discussed above, the carriage motor 230 is driven to move the ink ejection heads 244 through 247 of the respective colors in a main scanning direction relative to the printing paper P, while the paper feed motor 235 is actuated to feed the printing paper P in a sub-scanning direction. The control circuit 260 repeats main scans and sub-scans of the carriage 240 and drives nozzles at adequate timings to eject ink droplets according to print data. The color printer 200 thus prints a resulting color image on the printing paper P.

### B-2. Schema of Image Printing Process

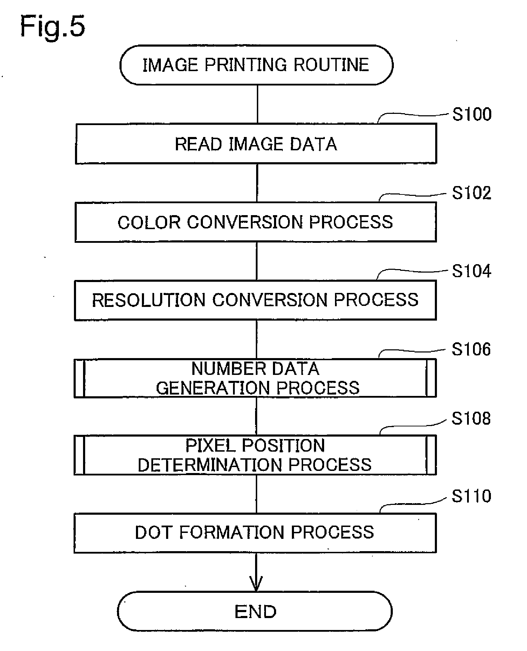

Fig. 5 is a flowchart showing an image printing routine executed by the computer 100 and the printer 200 in the system of the embodiment, so as to make object image data subjected to a preset series of image processing and print a processed image on a printing medium. The first half of the image printing routine is performed by the CPU of the computer 100, whereas the latter half is performed by the CPU of the control circuit 260 in the printer 200. The image printing process of the embodiment is described below with reference to the flowchart of Fig. 5.

When the image printing routine starts, the computer 100 first reads object image data to be converted (step S100). The object image data are RGB color image data in this embodiment, although monochromatic image data may be replaced with the color image data.

The input color image data goes through a color conversion process (step S102). The color conversion process converts the RGB color image data expressed by combinations of tone values of the colors R, G, and B into image data expressed by combinations of tone values of respective colors used for printing. As mentioned above, the printer 20 prints an image with the four color inks C, M, Y, and K. The color conversion process of this embodiment accordingly converts the image data expressed by the tone values of the colors R, G, and B into image data expressed by the tone values of the four colors C, M, Y, and K. The procedure of color conversion refers to a three-dimensional numerical table called a color conversion table (LUT). The LUT stores a mapping of the tone values of the respective colors C, M, Y, and K to the RGB color image data and thus facilitates and accelerates the color conversion.

The color-converted image data then goes through a resolution conversion process (step S104). The resolution conversion process converts the resolution of the image data into a resolution for printing with the printer 200 (printing resolution). As described previously, size reduction of pixels to attain printing at the higher resolution effectively enhances the picture quality of resulting prints. The increased resolution of original image data is, however, not essential for the increased printing resolution. The dot printing technique takes only either of a dot-on state or a dot-off state with respect to each pixel. Even in the case of variable-size dot printing, only several tones are expressible in each pixel. The input image data of, for example, 1 byte, on the other hand, can express 256 tones with respect to each pixel. Namely the number of expressible tones by dot printing in each pixel is significantly different from the number of expressible tones by the input image data. Setting the higher printing resolution than the resolution of the input image data thus leads to improvement in picture quality of resulting prints. On this ground, the process of step S104 in the flowchart of Fig. 5 converts the resolution of the input image data into the higher printing resolution.

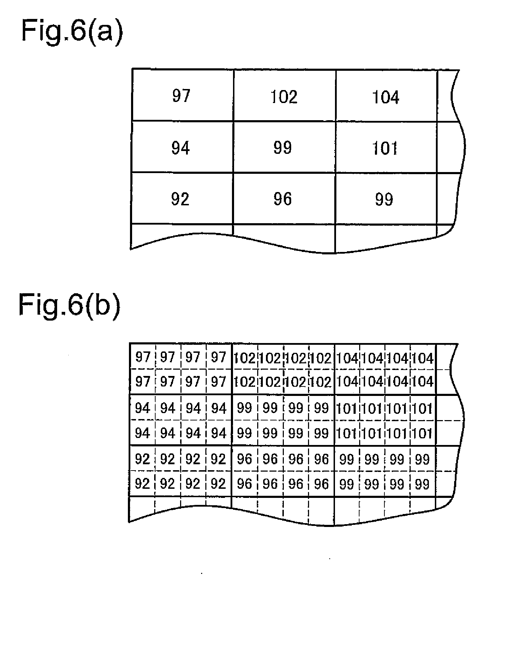

Figs. 6(a) and 6(b) show an example of the resolution conversion process executed in the first embodiment. The prior color conversion gives the image data of the C, M, Y, and K colors. The resolution conversion process discussed below is applied to the image data in any of these colors. For the simplicity of explanation, the color is not specified in the following description.

Fig. 6(a) shows part of image data after color conversion. The color-converted image data has tone values allocated to the respective pixels arranged in lattice. Each rectangle in Fig. 6(a) represents a pixel, and the numeral in the rectangle denotes a tone value allocated to the pixel. One available method to increase the resolution of the image data creates new pixels by interpolation of existing pixels. The resolution conversion process of this embodiment, however, adopts the simplest technique of dividing each pixel into smaller pixels.

Fig. 6(b) shows division of pixels for conversion of the resolution. In the illustrated example, each pixel is divided into four in the main scanning direction (the horizontal direction in the drawing) and into two in the sub-scanning direction (the vertical direction in the drawing). Namely one pixel is divided into eight smaller pixels. The broken lines in each solid rectangle of Fig. 6(b) represent divisions of each pixel. The tone value given to the original pixel is allocated to all the smaller divisions of the pixel. Such division of pixels quadruples the resolution of the image data in the main scanning direction and doubles in the sub-scanning direction. The multiplication of resolution may be set arbitrarily according to the requirements.

After conversion of the input resolution into the printing resolution, the computer 100 starts a number data generation process (step S106). The color-converted image data are tone data having tone values allocated to the respective pixels. The printer 200 creates dots at adequate densities on pixel positions to print an image. The required procedure accordingly converts the tone data into dot on-off state data of the respective pixels and transfers the dot on-off state data to the printer 200. Output of the dot on-off state data in units of individual pixels to the printer 200 undesirably extends the time required for data transfer with an increase in number of pixels and thereby impedes high-speed image printing. The image printing process of this embodiment collects every predetermined number of multiple pixels to one pixel group and transfers dot number data representing the number of dots to be created in each pixel group to the printer 200 in units of pixel groups. The dot number data representing the number of dots to be created in each pixel group may be obtained by converting image data into dot on-off state data of respective pixels and then collecting every predetermined number of multiple pixels to one pixel group. Another applicable procedure may first collect every predetermined number of multiple pixels to one pixel group and then determine the number of dots to be created in each pixel group as discussed later. The number data generation process of step S106 generates the dot number data representing the number of dots to be created in each pixel group and transfers the generated dot number data to the printer 20. The details of the number data generation process will be discussed later.

The CPU of the control circuit 260 in the printer 200 receives the dot number data supplied from the computer 100 and starts a pixel position determination process (step S108). As mentioned above, the computer 100 supplies the dot number data that represent the number of dots to be created in each pixel group, instead of the dot on-off state data of respective pixels. The pixel position determination process determines the positions of dot-on pixels in each pixel group, based on the received dot number data with respect to the pixel group. The details of the pixel position determination process will be discussed later.

After determination of the positions of dot-on pixels, the printer 200 actually creates dots at the dot-on pixel positions thus determined (step S110). As discussed previously with reference to Fig. 3, while repeating the main scans and the sub-scans of the carriage 240, the printer 200 drives and actuates the ink ejection heads to eject the ink droplets and thereby create ink dots on the printing paper. A resulting image corresponding to image data is thus printed on the printing paper.

### B -3. Number Data Generation Process in First Embodiment

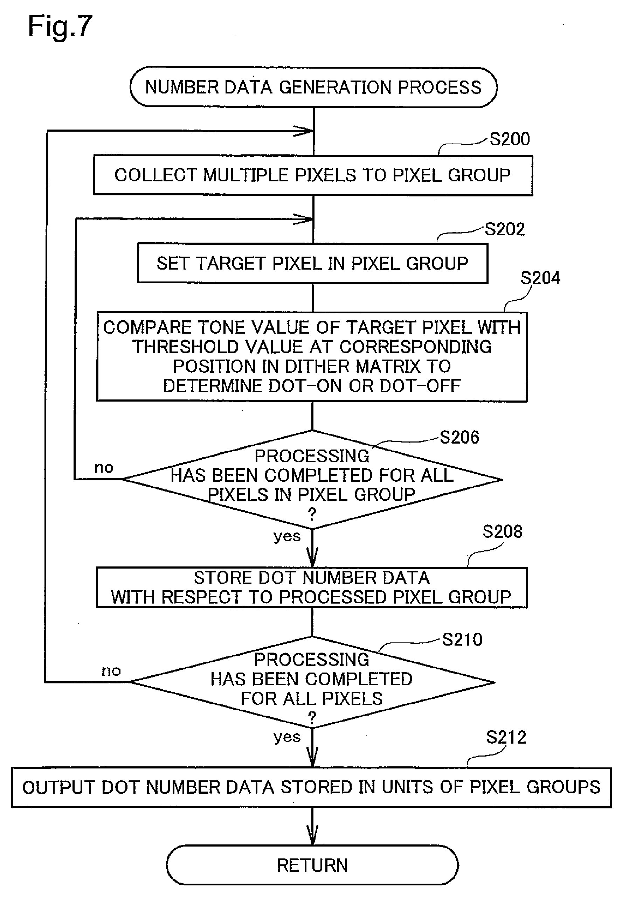

Fig. 7 is a flowchart showing the details of the number data generation process executed in the first embodiment. The details of the number data generation process are described with reference to this flowchart.

The number data generation process first collects a predetermined number of multiple pixels to a pixel group (step S200). The precedent resolution conversion process has divided one pixel into eight smaller pixels. In this embodiment, the eight smaller pixels obtained by division of one pixel are thus collected to one pixel group. For example, one pixel on the upper left corner of Fig. 6(a) is divided into eight smaller pixels arranged vertically in four columns and horizontally in two rows on the upper left corner of Fig. 6(b). These eight smaller pixels constitute one pixel group. The predetermined number of multiple pixels collected to one pixel group may not be mutually adjacent pixels, but may be any pixels having a specified positional relation.

In the case of collecting multiple smaller pixels as divisions of one identical pixel to one pixel group, the resolution conversion process may be omitted from the image printing routine of Fig. 5. In the case of such omission, the terminology 'pixel group' in the following description is to be replaced by 'the pixel prior to resolution conversion'.

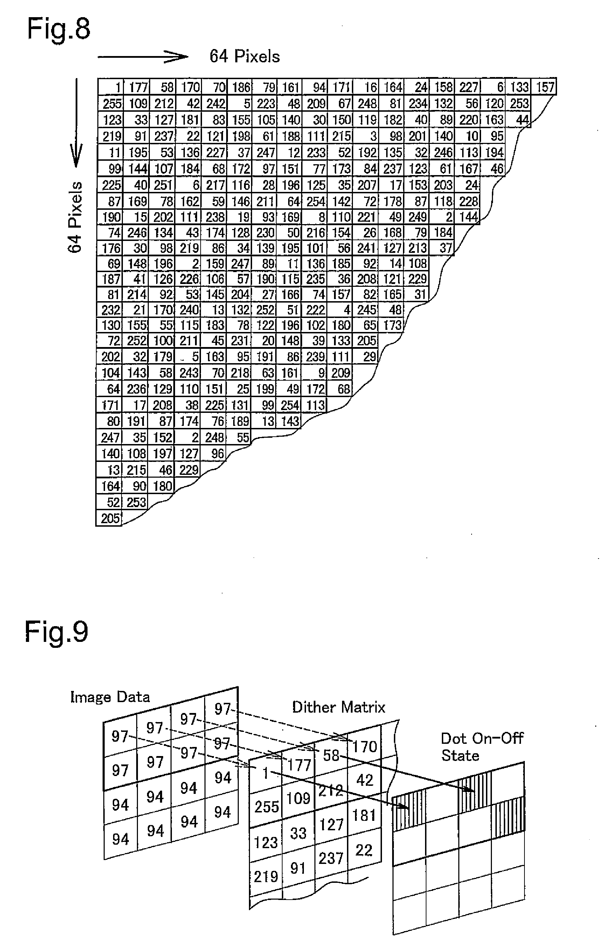

The number data generation process subsequently sets one object pixel for determination of the dot on-off state (target pixel) among the predetermined number of multiple pixels collected to one pixel group (step S202). The process then compares the tone value allocated to the target pixel with a threshold value stored at the corresponding position in a dither matrix to determine the dot on-off state with respect to the target pixel (step S204). The dither matrix is a two-dimensional numerical table that stores multiple threshold values arranged in lattice. The procedure of determining the dot on-off state based on a dither matrix is described with reference to Figs. 8 and 9. Fig. 8 shows part of a dither matrix. This dither matrix stores threshold values, which are selected at random throughout a tone value range of 1 to 255 and are allocated to a total of 4096 pixels of 64 pixels in length and 64 pixels in width. In this embodiment, the image data are 1-byte data and the tone value allocated to each pixel is in the range of 0 to 255, so that the threshold values in the dither matrix are selected in the tone value range of 1 to 255. The dither matrix is not restricted to the size of 64 pixels in both length and width as in the example of Fig. 8, but may have any desired size having different numbers of pixels in length and in width or having the same numbers of pixels in both length and width.

Fig. 9 conceptually shows determination of the dot on-off state with respect to each target pixel, based on the dither matrix. The procedure of determining the dot on-off state first compares the tone value of each target pixel with a threshold value stored at the corresponding position in the dither matrix. Each arrow of thin broken line in Fig. 9 represents comparison between the tone value of each target pixel and a threshold value stored at the corresponding position in the dither matrix. When the tone value of the target pixel is greater than the corresponding threshold value in the dither matrix, the process determines formation of a dot in the target pixel. When the tone value of the target pixel is smaller than the corresponding threshold value in the dither matrix, on the contrary, the process determines formation of no dot in the target pixel. In the example of Fig. 9, the tone value allocated to a pixel on the upper left corner of image data is '97', while the threshold value stored at the corresponding position in the dither matrix is '1'. Namely the process determines formation of a dot in this pixel. Each arrow of solid line in Fig. 9 represents a process of determining formation of a dot in a target pixel and writing the result of determination at a corresponding position in a memory. An adjacent pixel on the right side of the upper left pixel also has the tone value '97', while the corresponding threshold value in the dither matrix is '177'. The threshold value is greater than the tone value, so that the process determines formation of no dot in this pixel. In this manner, the process refers to the dither matrix and determines formation or no-formation of a dot in the target pixel at step S204 in the flowchart of Fig. 7.

The number data generation process then determines whether the above series of processing has been completed with respect to all the pixels in the pixel group (step S206). When the pixel group still has any unprocessed pixel (step S206: no), the process returns to step S202 and repeats the subsequent series of processing. When the dot on-off state has been determined with respect to all the pixels in the pixel group (step S206: yes), the process detects the number of dots to be created in the pixel group as dot number data and stores the dot number data with respect to the processed pixel group into the memory (step S208). In the illustrated example of Fig. 9, three pixels are determined as dot-on pixels in the pixel group on the upper left corner of the image data. Namely the dot number data representing the dot number '3' is stored into the memory.

After conclusion of the processing with regard to one pixel group, the process subsequently determines whether the processing has been completed with regard to all the pixels included in image data (step S210). When there is any unprocessed pixel, the process returns to step S200 to set a next pixel group, repeats the subsequent series of processing to generate dot number data with regard to the next pixel group, and stores the dot number data (step S208). When the processing has been completed with regard to all the pixels in the image data (step S210: yes), the process outputs the dot number data stored in units of pixel groups to the printer 200 (step S212). Here terminates the number data generation process shown in Fig. 7.

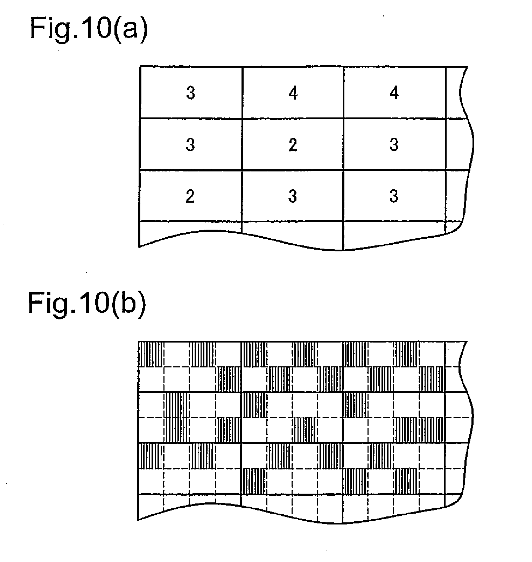

Fig. 10(a) conceptually shows dot number data obtained by the number data generation process discussed above. Each of multiple rectangles represents a pixel group, and the numeral shown in each pixel group denotes storage of the number of dots to be created in the pixel group. In the system of this embodiment, the computer 100 converts color-converted image data into dot number data as shown in Fig. 10(a) and outputs only the dot number data stored with respect to each pixel group to the printer 200. Output of only the dot number data desirably reduces the data volume and thus ensures higher-speed data output, compared with the procedure of outputting the dot on-off state data of individual pixels, as discussed below.

Fig. 10(b) shows the dot on-off state of respective pixels in multiple pixel groups. The thin broken lines in Fig. 10(b) show that each pixel group consists of multiple pixels. Each square filled with slant lines represents a dot-on pixel where a dot is to be created.

It is assumed that the computer 100 outputs the dot on-off state data of individual pixels as shown in Fig. 10(b) to the printer 200. When there is only one type of dot, each pixel takes only either of the two states, that is, the dot-on state or the dot-off state. The data volume required for each pixel is accordingly 1 bit. Since each pixel group consists of eight pixels, the data volume output to the printer 200 is 8 bits with respect to each pixel group.

The procedure of this embodiment, on the other hand, outputs the dot number data representing the number of dots to be created in each pixel group. The number of dots to be created in one pixel group varies in the range of 0 to 8. The dot number data with respect to each pixel group thus requires only 4 bits. This desirably halves the data volume, compared with output of the dot on-off state data of individual pixels. Output of the dot number data in units of pixel groups thus attains high-speed data transfer to the printer 200. The dot number data transferred from the computer 100 go through the pixel position determination process executed by the printer 200 to be converted into the dot on-off state data of individual pixels, as discussed below.

### B-4. Pixel Position Determination Process in First Embodiment

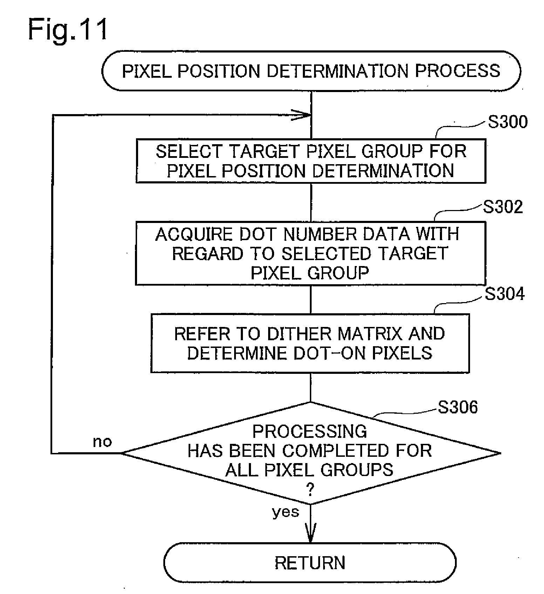

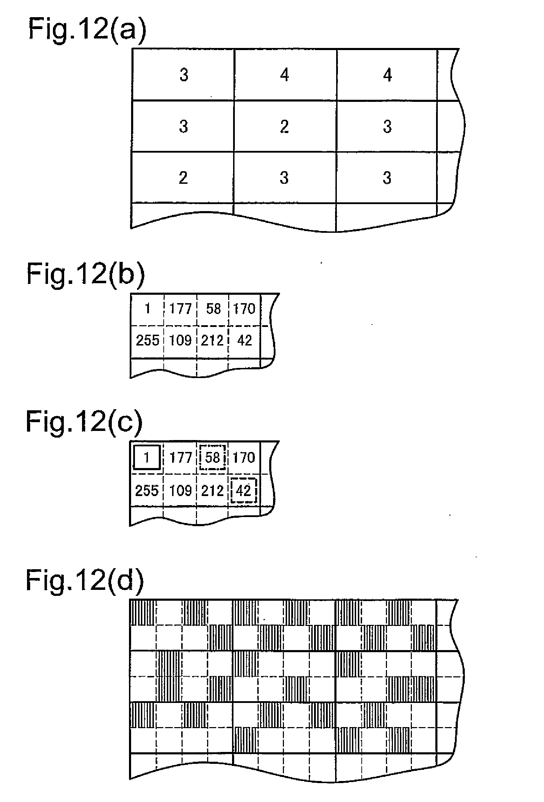

Fig. 11 is a flowchart showing the details of the pixel position determination process executed in the image printing routine of the first embodiment. The CPU of the control circuit 260 in the printer 200 receives the dot number data transferred in units of pixel groups from the computer 100 and executes the pixel position determination process. Fig. 12 conceptually shows conversion of the dot number data representing the number of dots to be created in each pixel group into the dot on-off state data of individual pixels by the pixel position determination process. The details of the pixel position determination process are described below with reference to Figs. 11 and 12.

The pixel position determination process first selects a target pixel group as an object of processing (step S300 in the flowchart of Fig. 11) and acquires the dot number data representing the number of dots to be created in the selected target pixel group (step S302). Fig. 12(a) conceptually shows the dot number data transferred in units of pixel groups from the computer 100. In this illustrated example, a pixel group on the upper left corner is selected as a target pixel group going through the pixel position determination process. The process acquires the dot number data '3' as the number of dots to be created in the selected target pixel group at step S302 in Fig. 11.

The process subsequently refers to a priority order of pixels in the target pixel group for dot formation and determines dot-on pixels (step S304). In this example, the dither matrix is used to set the priority order of dot formation. As discussed previously with reference to Fig. 8, threshold values are set at respective pixel positions in the dither matrix. Determination of the dot on-off state in one pixel compares the tone value of image data allocated to the pixel with a threshold value at the corresponding position in the dither matrix. When the tone value is greater than the threshold value, the pixel is determined as a dot-on pixel. The pixel having the smaller setting of the threshold value in the dither matrix has the greater tendency of dot formation. The dither matrix is thus assumed to show the priority order of respective pixels for dot formation. The procedure of this embodiment takes advantage of the characteristics of the dither matrix and uses the dither matrix to set the priority order of pixels in the target pixel group for dot formation.

In the illustrated example of Fig. 12(a), the pixel group on the upper left corner is selected as the target pixel group to be processed. The procedure reads threshold values in the dither matrix stored at corresponding positions of the respective pixels included in the selected target pixel group. Fig. 12(b) shows threshold values read from the corresponding pixel positions in the dither matrix shown in Fig. 8. Dots are created in the order of pixels having the smaller threshold values. The number of dots to be created in the currently processed target pixel group is 3 as shown in Fig. 12(a). The positions of dot-on pixels are determined according to the priority order of pixels for dot formation as shown in Fig. 12(c). In this illustrated example of Fig. 12(c), the pixel of the smallest threshold value surrounded by the solid line, the pixel of the second smallest threshold value surrounded by the broken line, and the pixel of the third smallest threshold value surrounded by the one-dot chain line are determined as dot-on pixels.

After determination of the positions of dot-on pixels in the target pixel group selected as the object of processing, it is determined whether the processing has been completed with regard to all the pixel groups (step S306 in the flowchart of Fig. 11). When there is any unprocessed pixel group (step S306: no), the pixel position determination process returns to step S300 to set a next pixel group and repeats the subsequent series of processing with respect to the next pixel group. The dot number data representing the number of dots to be created in each pixel group as shown in Fig. 12(a) are accordingly converted to the dot on-off state data of individual pixels as shown in Fig. 12(d). The squares filled with slant lines in Fig. 12(d) represent the dot-on pixels. On conclusion of the processing with regard to all the pixel groups (step S306: yes), the program exits from the pixel position determination process shown in Fig. 11 and returns to the image printing routine of Fig. 5.

The above description regards the image printing process executed in the first embodiment, as well as the details of the number data generation process and the pixel position determination process included in the image printing process. In the image printing process of the first embodiment, the computer 100 transfers the dot number data representing the number of dots to be created in each pixel group to the printer 200, instead of the dot on-off state data of the individual pixels. This arrangement significantly reduces the total volume of data transfer. Even when an image includes a large number of pixels, the procedure of the first embodiment ensures quick data transfer and high-speed image printing.

As described above, the dither matrix referred to in the number data generation process executed by the computer 100 is identical with the dither matrix referred to in the pixel position determination process executed by the printer 200. Such setting ensures complete restoration of the positions of dot-on pixels even in the case of transfer of only the dot number data from the computer 100 to the printer 200. As clearly understood from the comparison between Fig. 10(b) and Fig. 12(d), the positions of dot-on pixels based on the determination of the dot on-off state of the individual pixels executed by the computer 100 are perfectly matched with the positions of dot-on pixels determined by the printer 200. This proves complete restoration of the positions of dot-on pixels. The arrangement of the first embodiment thus enables the printer 200 to accurately determine the positions of dot-on pixels, while ensuring quick transfer of the dot number data from the computer 100 to the printer 200. This leads to high-speed printing of a high-quality image.

### B-5. Modified Examples

The procedure of the first embodiment may be modified in various ways. Some examples of possible modification are discussed briefly below.

### (1) First Modified Example

As discussed above with reference to Figs. 7 through 10, the number data generation process of the first embodiment converts image data into dot on-off state data of individual pixels, further converts the dot on-off state data into dot number data representing the number of dots to be created in each pixel group, and transfers the dot number data to the printer 200. Namely the computer 100 determines the dot on-off state with specification of dot-on pixel positions. The information on specification of dot-on pixel positions is, however, omitted from the transferred data, and only the information on the number of dots to be created in each pixel group is transferred to the printer 200. In view of such omission, the number data generation process executed in a first modified example thus generates only the dot number data representing the number of dots to be created in each pixel group without specification of dot-on pixel positions.

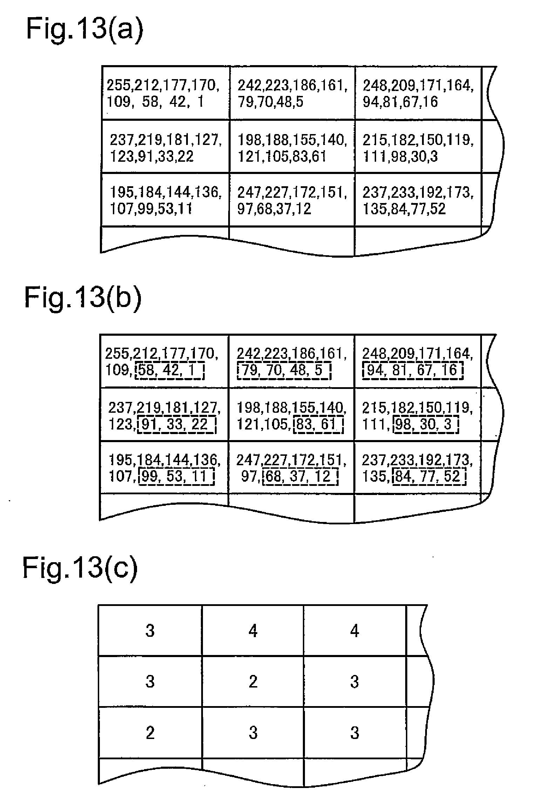

Fig. 13 shows the outline of the number data generation process executed in the first modified example. Fig. 13(a) shows a simplified dither matrix referred to in the number data generation process of the first modified example. The standard dither matrix referred to in the number data generation process of the first embodiment has the settings of threshold values corresponding to respective pixel positions (see Fig. 8). In the simplified dither matrix referred to in the first modified example, on the other hand, threshold values are not one-to-one mapped to the respective pixel positions but are collectively mapped to the respective pixel groups. Namely a set of multiple threshold values is one-to-one mapped to one pixel group. The number of multiple threshold values mapped to each pixel group is identical with the number of multiple pixels included in each pixel group. In the illustrated example of Fig. 13(a), a set of eight threshold values {255,212,177,170,109,58,42,1} is mapped to a pixel group on the upper left corner of the simplified dither matrix. Similarly another set of eight threshold values {242,223,186,161,79,70,48,5} is mapped to an adjacent pixel group on the right side.

The number data generation process of the first modified example compares the image data in each pixel group with a corresponding set of threshold values and thereby determines the number of dots to be created in each pixel without specification of dot-on pixel positions. For convenience of explanation, it is here assumed that target image data to be processed is identical with the example of image data processed in the first embodiment (see Fig. 6(b)). In the pixel group on the upper left corner of the image data, all the pixels have an identical tone value '97'. The pixel group at the corresponding position in the simplified dither matrix stores the set of eight threshold values {255,212,177,170,109,58,42,1}. Among these eight threshold values, only three threshold values {58,42,1} are smaller than the tone value '97' of the pixel group. Namely three dots are to be created in this pixel group. Part of the threshold values are surrounded by the broken line in Fig. 13(b). This shows that these threshold values are smaller than the tone value of the pixel group. The set of multiple threshold values are stored corresponding to each pixel group and are compared with the tone value of the pixel group. This procedure readily determines the number of dots to be created in the pixel group without specifying the dot-on pixel positions in the pixel group. This series of processing is repeated for all the pixel groups and determines the numbers of dots to be created in the respective pixel groups as shown in Fig. 13(c).

The simplified dither matrix referred to in the first modified example is equivalent to the standard dither matrix referred to in the first embodiment. Each set of multiple threshold values stored corresponding to each pixel group in the simplified dither matrix of Fig. 13 is obtained by gathering threshold values stored at respective pixel positions in the dither matrix of Fig. 8 to one pixel group. Such equivalency of the simplified dither matrix to the standard dither matrix gives the same result of the dot number specification based on the simplified dither matrix without specification of dot-on pixel positions as the result of the dot number specification based on the standard dither matrix with specification of dot-on pixel positions. This is proved by the fact that the dot number data obtained by processing the image data with the standard dither matrix (see Fig. 10(a)) are perfectly matched with the dot number data obtained by processing the same image data with the simplified dither matrix (see Fig. 13(c)).

The procedure of the first modified example determines the number of dots to be created in each pixel group by simple comparison between the set of multiple threshold values stored corresponding to each pixel group and the tone value of the image data in the pixel group. This arrangement does not require comparison between the threshold values and the tone values of the image data at individual pixel positions in each pixel group, thus more quickly generating the dot number data representing the number of dots to be created in each pixel group.

The procedure of the first modified example specifies only the number of the threshold values that are smaller than the tone value of the image data in each pixel group. Arrangement of the threshold values in the order of magnitude in each pixel group further enhances the processing speed. In the illustrated example of Fig. 13, in the pixel group on the upper left corner, the tone value of the image data is equal to '97', while the set of the threshold values are arranged in the order of magnitude {255,212,177,170,109,58,42,1}. These threshold values may be arranged either in a descending order or in an ascending order. The tone value of the image data varies in the range of 0 to 255, so that the tone value '97' is relatively small. This relatively small tone value is thus compared with the threshold values in the ascending order. The tone value '97' is first compared with the smallest threshold value '1' and is determined to be greater than the threshold value '1'. The tone value '97' is then compared with the adjacent second-smallest threshold value '42' and is also determined to be greater than the threshold value '42'. The tone value '97' is subsequently compared with the adjacent third-smallest threshold value '58'. In this manner, the tone value is successively compared with the threshold values in the ascending order. The tone value '97' is compared with the threshold value '109' and is determined to be smaller than the threshold value '1 09'. Since the threshold values in one pixel group are arranged in the order of magnitude, it is obvious that the subsequent threshold values are greater than the tone value once the threshold value exceeds the tone value. No further comparison is accordingly required. Although each pixel group stores eight threshold values, the dot number data is obtained by comparison of the tone value with only the four threshold values in this pixel group.

When the tone value of the image data is relatively large, on the other hand, the tone value is compared with the threshold values in the descending order. For example, when the tone value of the image data is '200' in the above example, the comparison with the tone value starts from the largest threshold value '255' and then goes to the adjacent second-largest threshold value '212', and the adjacent third-largest threshold value '177'. The dot number data in the pixel group is obtained by comparison of the tone value with only these three threshold values. As described above, storage of the threshold values in the order of magnitude in each pixel group ensures quick determination of the number of dots to be created in the pixel group.

### (2) Second Modified Example

The pixel position determination process of the first embodiment discussed above receives the dot number data representing the number of dots to be created in each pixel group, refers to the dither matrix, and determines the positions of dot-on pixels in each pixel group (see Fig. 12). The threshold values of the individual pixels are, however, not essential for determination of the positions of dot-on pixels according to the dot number data. The only requirement is a priority order of the respective pixels in each pixel group for dot formation. In view of such requirement, the pixel position determination process in a second modified example refers to a matrix storing a priority order of pixels (hereafter referred to as the priority order matrix), instead of the dither matrix, to determine the positions of dot-on pixels.

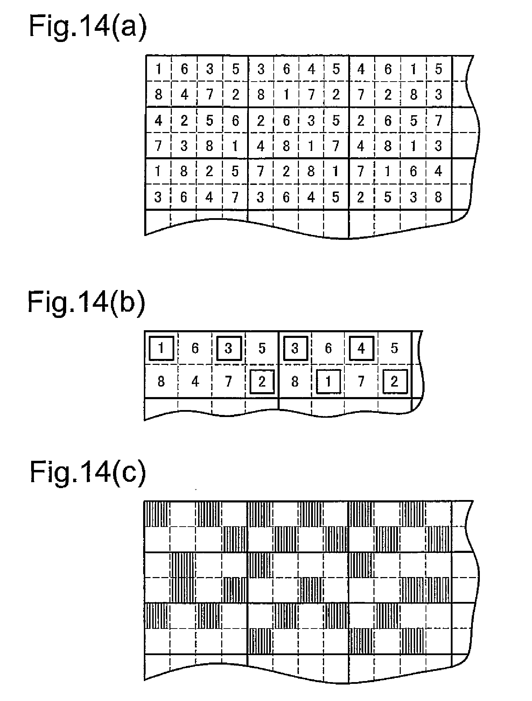

Fig. 14 conceptually shows determination of the positions of dot-on pixels according to a priority order matrix in the pixel position determination process of the second modified example. Fig. 14(a) shows a priority order matrix. Each rectangle of the thick solid line represents a pixel group. Each pixel group is divided into eight pixels as shown by the thin broken lines. The numerals shown in the respective pixels denote a priority order of the pixels in each pixel group for dot formation (that is, an order of dot formation).

Application of the priority order matrix facilitates determination of the positions of dot-on pixels according to the dot number data. The dot number data used for the description of this example are those shown in Fig. 12(a) and are identical with the dot number data used for the description of the pixel position determination process in the first embodiment. According to the dot number data of Fig. 12(a), the number of dots to be created in a pixel group on the upper left corner is 3. The procedure of the second modified example accordingly selects three pixels having first to third priority numbers in the upper left pixel group of the priority order matrix shown in Fig. 14(a) and determines the positions of dot-on pixels. Fig. 14(b) shows such selection of three pixels to determine the positions of dot-on pixels. The solid lines surrounding the numerals in the pixels mean that the pixels are selected. This series of processing is repeated with regard to all the pixel groups to determine all the positions of dot-on pixels as shown in Fig. 14(c). The squares filled with slant lines in Fig. 14(c) represent dot-on pixels.

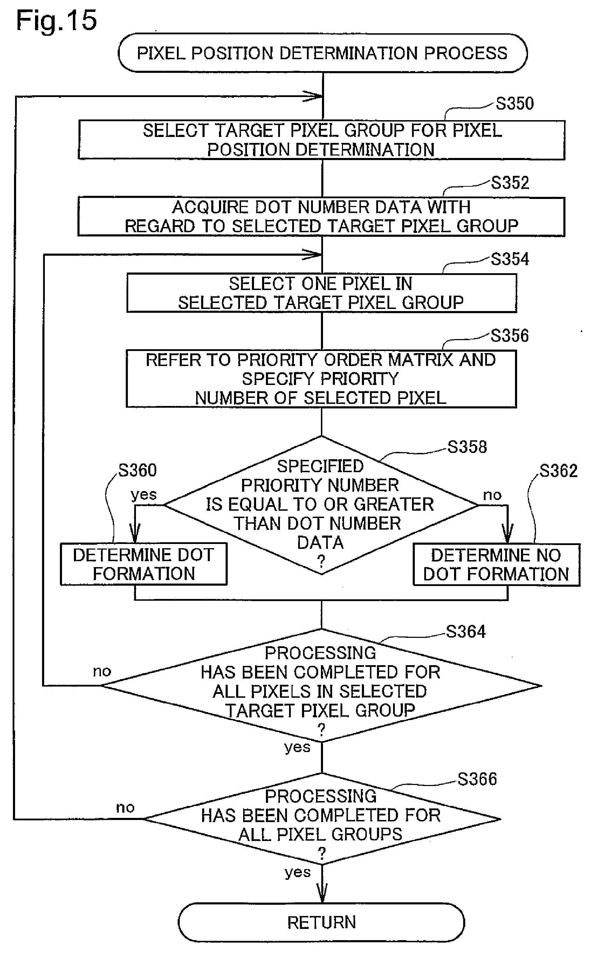

Fig. 15 is a flowchart showing the pixel position determination process of the second modified example that refers to the priority order matrix and determines the positions of the dot-on pixels. This modified processing flow is described briefly with reference to the flowchart of Fig. 15. This modified pixel position determination process based on the priority order matrix first selects a target pixel group for determination of the dot-on pixel positions (step S350) and acquires the dot number data of the selected target pixel group (step S352). As shown in Fig. 14, in this example, the pixel group on the upper left corner is the target pixel group, and the dot number data of this target pixel group represents '3'.

The modified processing flow then selects one target pixel as an object of processing in the selected pixel group (step S354) and refers to the priority order matrix to specify the priority number of the selected target pixel for dot formation (step S356). In this example, the target pixel is an upper left pixel in the selected target pixel group on the upper left corner of the image. According to the priority order matrix of Fig. 14(a), the target pixel has the priority number '1', which represents formation of a dot first in the target pixel group. A right pixel adjacent to this target pixel has the priority number '6'. The processing flow of Fig. 15 refers to the priority order matrix and specifies the priority number of the selected target pixel at step S356.

The specified priority number of the target pixel is compared with the acquired dot number data of the selected target pixel group (step S358). When the dot number data is equal to or greater than the specified priority number of the target pixel (step S358: yes), a dot is to be created in the target pixel (step S360). When the dot number data is less than the specified priority number of the target pixel (step S358: no), on the other hand, no dot is to be created in the target pixel (step S362).

After determination of the dot on-off state of one target pixel, it is determined whether processing has been completed for all the pixels included in the selected target pixel group (step S364). When the selected pixel group has any unprocessed pixel (step S364: no), the processing flow returns to step S354 to select a next target pixel and repeats the subsequent series of processing. Repetition of this processing determines the dot on-off state of all the pixels included in the selected pixel group (step S364: yes). Namely the positions of dot-on pixels are determined with regard to the selected pixel group. It is then determined whether determination of the positions of dot-on pixels has been completed for all pixel groups (step S366). When there is any unprocessed pixel group (step S366: no), the processing flow returns to step S350 to set a next target pixel group and repeats the subsequent series of processing. Repetition of this processing determines the positions of dot-on pixels with regard to all the pixel groups (step S366: yes). This terminates the pixel position determination process of the second modified example shown in Fig. 15.

The procedure of this modified example compares the priority number of each pixel included in a selected target pixel group with the dot number data representing the number of dots to be created in the pixel group. Selection of pixels having the priority numbers of not greater than the dot number data readily determines the positions of dot-on pixels in the pixel group. This method does not need to count up the number of pixels selected for dot formation according to the dot number data, thus facilitating determination of the positions of dot-on pixels.

The largest value stored in the priority order matrix (that is, the largest priority number allocated to the pixel) is the number of pixels included in one pixel group and is thus significantly smaller than the threshold values stored in the dither matrix. Namely the priority order matrix occupies a remarkably smaller storage capacity than the dither matrix. The printer executing the pixel position determination process may not have a sufficient storage capacity. The use of the priority order matrix to determine the positions of dot-on pixels advantageously saves the storage capacity of the printer.

The priority order matrix shown in Fig. 14(a) corresponds to the dither matrix referred to in the number data generation process for determination of the dot on-off state in the respective pixels. As mentioned previously with regard to the pixel position determination process of the first embodiment, the threshold values set in the dither matrix represent the priority order of dot formation. The priority order set in the priority order matrix shown in Fig. 14(a) is identical with the ascending order of the threshold values in the dither matrix allocated to the respective pixels in the pixel group. Setting the priority order matrix corresponding to the dither matrix referred to in the number data generation process ensures adequate determination of the positions of dot-on pixels according to the priority order matrix. As clearly understood from the comparison between Fig. 14(c) and Fig. 10(b), the positions of dot-on pixels determined according to the priority order matrix are completely matched with the positions of dot-on pixels according to the determination of the dot on-off state of the individual pixels. This proves adequate determination of the positions of dot-on pixels according to the priority order matrix.

As mentioned above, the number data generation process is required to specify only the number of dots to be created in each pixel group and does not demand information on the positions of dot-on pixels, that is, information regarding which pixels in each pixel group are dot-on pixels. The number data generation process may thus refer to the simplified dither matrix to generate the dot number data, instead of the standard dither matrix. The number data generation process based on the standard dither matrix specifies not only the number of dots to be created in each pixel group but the positions of dot-on pixels. Omission of the information on the positions of dot-on pixels from the standard dither matrix gives the simplified dither matrix. The modified number data generation process based on the simplified dither matrix thus specifies only the number of dots to be created in each pixel group.

The pixel position determination process receives the dot number data representing the number of dots to be created in each pixel group and is required to determine only the positions of dot-on pixels. The pixel position determination process may thus refer to the priority order matrix to determine the positions of dot-on pixels, instead of the standard dither matrix. Omission of the information used for specification of the number of dots to be created in each pixel group from the dither matrix gives the priority order matrix.

Both the simplified dither matrix and the priority order matrix have less information volumes than the standard dither matrix. The combination of the simplified dither matrix and the priority order matrix gives the equivalent volume of information to that of the standard dither matrix. Namely a simplified dither matrix and a priority order matrix can be generated corresponding to an original standard dither matrix of any arrangement. The generation of the dot number data according to the simplified dither matrix and the subsequent determination of the positions of dot-on pixels according to the priority order matrix ensure formation of dots in the identical arrangement with the result of dot formation according to the original standard dither matrix.

### C. Second Embodiment

The procedure of the first embodiment discussed above divides one pixel into multiple smaller pixels and gathers the multiple smaller pixels as divisions of an identical original pixel to a pixel group. Division of one pixel into multiple smaller pixels is required, for example, when an image is printed at a higher resolution than the resolution of input image data. In the procedure of the first embodiment, the respective pixels included in one pixel group have an identical tone value. The technique of the invention is, however, also applicable to a pixel group of multiple pixels having different tone values. For example, when the printing resolution is set identical with the resolution of the input image data and one pixel group includes multiple pixels of image data, the multiple pixels included in the pixel group may have different tone values. In another example, when additional pixels are newly created for printing an image at a higher resolution than the resolution of input image data and the tone values of the newly created pixels are specified by interpolation, multiple pixels included in one pixel group have different tone values. In still another example, when the printing resolution is only slightly higher than the resolution of input image data and one pixel is divided into multiple smaller pixels, one pixel group may include smaller pixels as divisions of different original pixels. In such cases, the multiple pixels included in one pixel group may have different tone values. Application of the technique of the invention to such cases is described below as a second embodiment.

### C-1. Number Data Generation Process in Second Embodiment

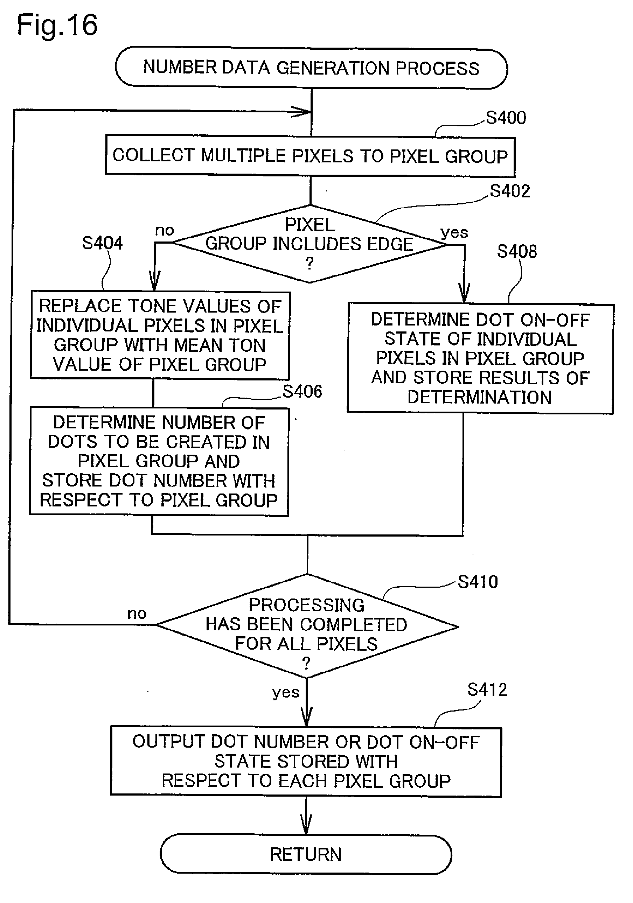

Fig. 16 is a flowchart showing a number data generation process executed in the second embodiment. Like the number data generation process of the first embodiment, the number data generation process of the second embodiment is executed by the CPU of the computer 100 in the course of the image printing process shown in Fig. 5.

The number data generation process of the second embodiment first collects a predetermined number of multiple pixels to one pixel group (step S400). As in the description of the first embodiment, each pixel group includes eight pixels, that is, two rows in the horizontal direction and four columns in the vertical direction. This is only illustrative and not restrictive at all, and each pixel group may include any number of rows and any number of columns.

The number data generation process then determines whether the pixel group includes an edge (step S402). The procedure of this embodiment determines that the pixel group includes an edge when a tone difference between a largest tone value and a smallest tone value among the tone values allocated to the multiple pixels included in the pixel group is not less than a preset level. This method is, however, not restrictive at all, and any other suitable method is applicable to detection of an edge.

When it is determined that no edge is included in the pixel group (step S402: no), the process calculates a mean tone value of the pixel group and replaces the tone values of the respective pixels in the pixel group with the calculated mean tone value (step S404). The respective pixels included in one pixel group accordingly have an identical tone value. The number of dots to be created in the pixel group is thus determined according to the same procedure as the first embodiment described above.

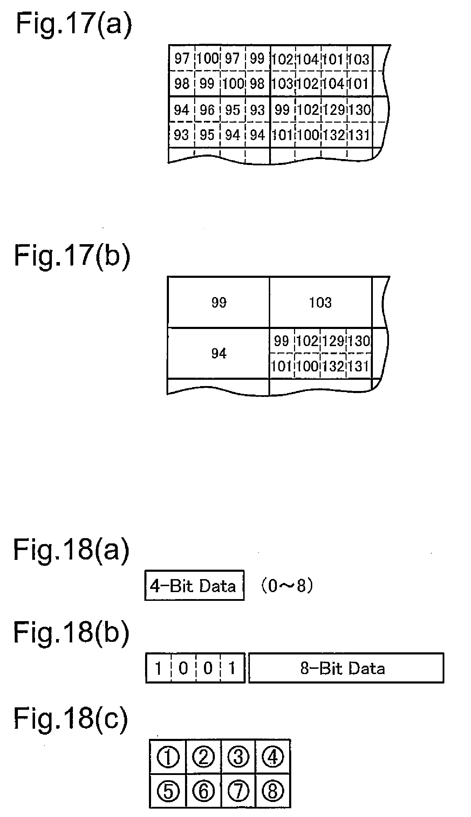

Fig. 17 shows replacement of the tone values of the respective pixels in each pixel group with the mean tone value in the case of detection of no edge in the pixel group. Fig. 17(a) shows tone values allocated to respective pixels in pixel groups. A pixel group on the upper left corner has a maximum tone value '1 00' and a minimum tone value '97'. There is a relatively small tone difference of '3'. A lower right pixel group, on the other hand, has a maximum tone value '132' and a minimum tone value '99'. There is a significantly large tone difference of '33'. One concrete procedure presets an adequate threshold value (for example, a tone value '20') and detects the presence of an edge in one pixel group when the tone difference in the pixel group is greater than the preset threshold value. The procedure detects no edge in the pixel group when the tone difference in the pixel group is smaller than the preset threshold value. In response to detection of no edge, the procedure calculates the mean tone value of the pixel group and replaces the tone values of all the pixels included in the pixel group with the calculated mean tone value.

Fig. 17(b) shows replacement of the tone values of the respective pixels included in one pixel group with the calculated mean tone value, in response to detection of no edge in the pixel group. In the illustrated example, the upper left pixel group, an adjacent pixel group on the right, and another adjacent pixel group immediately below have relatively small tone differences. All the pixels in the respective pixel groups are thus replaced by the individually calculated mean tone values '99', '103', and '94'. With regard to each pixel group having the tone values of the respective pixels replaced with the mean tone value, all the pixels in the pixel group have the identical tone value. The process thus determines the number of dots to be created in such a pixel group according to the procedure of the first embodiment discussed above (step S406 in the flowchart of Fig. 16). The lower right pixel group, on the other hand, has a relatively large tone difference of '33', which detects the presence of an edge. The process does not replace the tone values with the mean tone value in this pixel group but compares the tone values of the individual pixels in the pixel group with the corresponding threshold values in the dither matrix to determine the dot on-off state of the respective pixels (see Fig. 9) and stores the results of determination regarding the dot on-off state of the respective pixels (step S408 in Fig. 16).

After conclusion of the processing with regard to one pixel group, the process subsequently determines whether the processing has been completed with regard to all the pixels included in image data (step S410). When there is any unprocessed pixel (step S410: no), the process returns to step S400 to set a next target pixel group of multiple pixels and repeats the subsequent series of processing. When all the pixels have been collected to pixel groups and processed (step S410: yes), the process outputs the dot number data, which have been stored at step S406, with regard to the pixel groups with no edge to the printer 200, while outputting the dot on-off state data of individual pixels, which have been stored at step S408, with regard to the pixel groups with an edge to the printer 200 (step S412). Namely the dot number data of the respective pixel groups and the dot on-off state data of the individual pixels in the pixel groups are simultaneously output to the printer 200. The number data generation process of the second embodiment outputs these data in the following formats to discriminate the dot number data from the dot on-off state data of the individual pixels.

Fig. 18 shows the formats of the data output from the computer 100 to the printer 200 in the second embodiment. The dot number data representing the number of dots to be created in each pixel group are output as 4-bit data with regard to each pixel group as shown in Fig. 18(a). Each pixel group includes eight pixels, so that the dot number varies only in the range of 0 to 8. The data capacity of 4 bits is thus sufficient to express the number of dots. The dot on-off state data representing the dot on-off state of the individual pixels are output in the format shown in Fig. 18(b). The first four bits express a value selected in a range of 9 to 15 (the value '9' in the illustrated example of Fig. 18(b)), and the subsequent eight bits express the settings of the dot on-off state of the individual pixels. Since the dot number varies only in the range of 0 to 8, setting the value of or over 9 in the 4-bit data head means that the subsequent 8-bit data does not show the dot number but represents the dot on-off state of the individual pixels. The respective bits of the 8-bit data may be allocated to the individual pixels, for example, in an order of Fig. 18(c). The dot on-off state data representing the dot on-off state of respective pixels in each pixel group are output in this format. In the case of application of the formats of Fig. 18 to the data output, 4-bit dot number data are transferred to the printer 200 with regard to the pixel groups with no edge, while 12-bit dot on-off state data are transferred to the printer 200 with regard to the pixel groups with an edge.

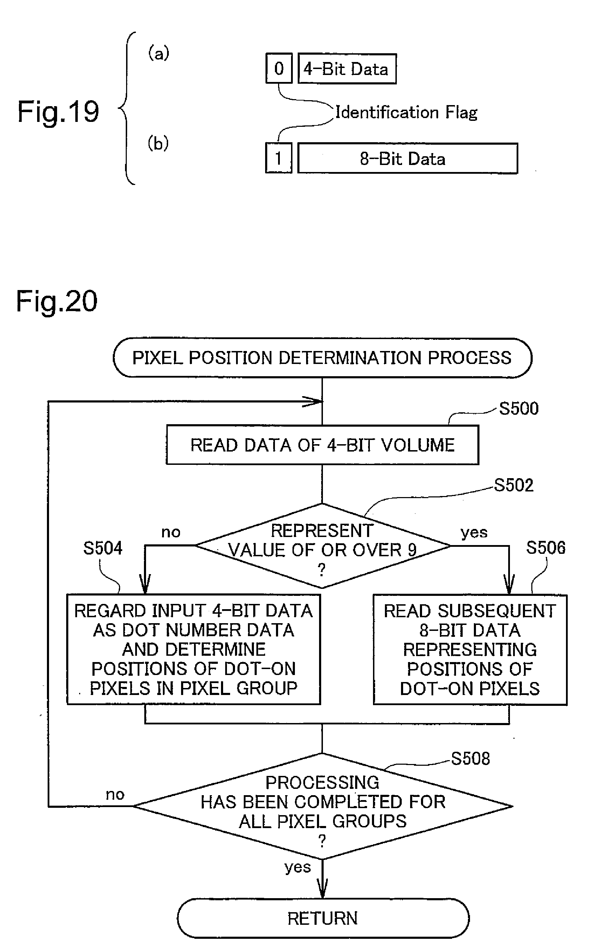

This method is, however, not restrictive at all, and any other suitable method may be applied to output the dot number data and the dot on-off state data of the individual pixels simultaneously. One applicable method may additionally use an identification bit. For example, the identification bit set equal to '0' means that subsequent 4-bit data is dot number data as shown in Fig. 19(a), whereas the identification bit set equal to '1' means that subsequent 8-bit data is dot on-off state data of individual pixels as shown in Fig. 19(b). In the case of application of the formats of Fig. 19 to the data output, 5-bit dot number data are transferred to the printer 200 with regard to the pixel groups with no edge, while 9-bit dot on-off state data are transferred to the printer 200 with regard to the pixel groups with an edge.

As clearly understood from the comparison between the data transfer method of Fig. 18 and the data transfer method of Fig. 19, with regard to pixel groups with no edge, the volume of data transfer according to the method of Fig. 18 is less than that according to the method of Fig. 19. With regard to pixel groups with an edge, on the other hand, the volume of data transfer according to the method of Fig. 19 is less than that according to the method of Fig. 18. In the case of a high ratio of pixel groups with an edge, the method of Fig. 19 with the identification bit is suitable for the data transfer. In the case of a low ratio of pixel groups with an edge, on the other hand, the method of Fig. 18 is suitable for the data transfer. The pixel groups with an edge generally occupy a relatively low ratio, so that the method of Fig. 18 is preferable to attain the quicker data transfer.

As described above, the dot number data of the respective pixel groups and the dot on-off state data of the individual pixels are simultaneously output to the printer 200 at step S412 in the flowchart of Fig. 16. On completion of data output with regard to all the pixel groups, the program exits from the number data generation process of the second embodiment shown in Fig. 16 and returns to the image printing routine.

### C-2. Pixel Position Determination Process in Second Embodiment

As described above, in the procedure of the second embodiment, the dot number data and the dot on-off state data of the individual pixels are sent simultaneously from the computer 100. The printer 200 determines the positions of dot-on pixels according to the following method. In the description below, it is assumed that the formats of Fig. 18 are adopted for the data transfer.

Fig. 20 is a flowchart showing a pixel position determination process executed in the second embodiment to determine the positions of dot-on pixels. The pixel position determination process first inputs data of the 4-bit volume (step S500) and determines whether the input 4-bit data represents a value of or over 9 (step S502). As mentioned above, each pixel group includes eight pixels, and the dot number varies only in the range of 0 to 8. When the input 4-bit data represents a value of or over 9, it is determined that the input data is not the dot number data but the subsequent data is dot on-off state data of individual pixels. When the input 4-bit data represents a value of or below 8, on the other hand, it is determined that the input data is the dot number data representing the number of dots to be created in one pixel group.

When the input 4-bit data does not represent a value of or over 9 (step S502: no), the process regards the input 4-bit data as dot number data and determines the positions of dot-on pixels in the pixel group according to the same procedure as that of the first embodiment (step S504). When the input 4-bit data represents a value of or over 9 (step S502: yes), on the other hand, the process reads the subsequent 8-bit data and regards the subsequent 8-bit data as the dot on-off state data of the individual pixels to determine the positions of dot-on pixels (step S506).

After determination of the positions of dot-on pixels in one pixel group, it is determined whether the processing has been completed with regard to all the pixel groups (step S508). When there is any unprocessed pixel group, the pixel position determination process returns to step S500 and repeats the subsequent series of processing with respect to a next pixel group. The above series of processing is repeated until the positions of dot-on pixels are determined with regard to all the pixel groups. On conclusion of the processing with regard to all the pixel groups, the program exits from the pixel position determination process of the second embodiment shown in Fig. 20 and returns to the image printing routine.

The image printing process of the second embodiment executes the number data generation process shown in Figs. 16 through 19 and the pixel position determination process shown in Fig. 20. Even when multiple pixels included in one pixel group have different tone values, the image printing process of the second embodiment transfers the dot number data with regard to the pixel groups with no edge. This arrangement ensures quick data transfer to the printer 200 and thereby high-speed image printing.

The image printing process of the second embodiment transfers the dot on-off state data of the individual pixels with regard to the pixel groups with an edge. An increase in ratio of the pixel groups with an edge extends the time required for data transfer to the printer 200. One possible measure elevates the criterion for detection of edges and thereby reduces the potential for edge detection. This shortens the time required for data transfer and thereby enables high-speed image printing. With regard to the pixel groups with no edge, on the other hand, the tone values of the individual pixels in the pixel group are replaced with the calculated mean tone value. The excessive elevation of the criterion for edge detection (the excessively reduced potential for edge detection) to shorten the time of data transfer may lead to deterioration of the printing quality.

When the high picture quality is demanded for a resulting printed image, the printing resolution is typically set higher than the resolution of the input image data. Enhancement of the resolution is attained by division of original pixels into smaller pixels according to the resolution conversion process (step S104 in the flowchart of Fig. 5) or by interpolation for creation of additional pixels. In either case, the tone value gently varies in most pixel groups. In the image with the demand for the high printing quality, no edge is thus detected in most pixel groups even without elevation of the criterion for edge detection. This ensures quick data transfer with keeping the demanded high printing quality.

When the demanded printing resolution is not so high but is substantially equivalent to the resolution of the input image data, on the other hand, there is a high potential for edge detection in respective pixel groups. Elevation of the criterion for the reduced potential for edge detection is thus required to shorten the time of data transfer to the printer 200. In the case of setting the printing resolution to a relatively low level, the user generally gives preference to the high-speed printing over the printing quality. The relatively poor picture quality due to the elevated criterion for edge detection accordingly does not cause any significant problem.

### D. Third Embodiment

In the first and the second embodiments discussed above, each pixel takes only either of the two tone values corresponding to the dot-on state and the dot-off state. Some printers may, however, be capable of varying the size of dots or varying the density of ink used for dot formation to express a greater number of tone values in individual pixels. The technique of the invention is effectively applicable to such multi-valued printers. Application of the technique of the invention to a multi-valued printer is described below as a third embodiment.

### D-1. Schema of Image Printing Process in Third Embodiment

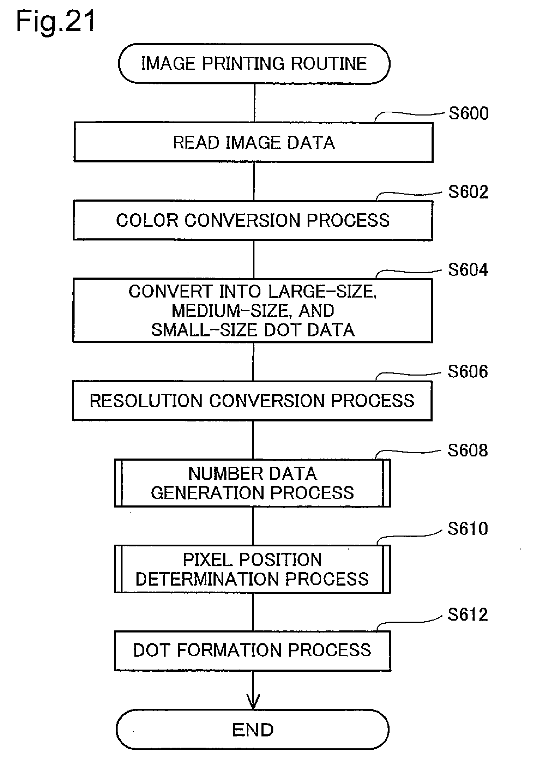

Fig. 21 is a flowchart showing an image printing routine executed in the third embodiment. The primary difference of the image printing process of the third embodiment from the image printing process of the first embodiment discussed above with reference to Fig. 5 is conversion of color-converted data into large-size, medium-size, and small-size dot data. The image printing process of the third embodiment is described below with the focus on such difference. Here the printer 200 is the multi-valued printer that is capable of varying the size of dots. The following description is, however, similarly applicable to the multi-valued printer that is capable of varying the density of ink instead of the dot size and to the multi-valued printer that is capable of varying both the dot size and the density of ink.

Like the image printing routine of the first embodiment, the image printing routine of the third embodiment reads object image data to be converted (step S600) and makes the input image data subjected to color conversion (step S602). The color conversion process converts the input image data into tone data expressed by the tone values of the respective colors C, M, Y, and K.

The printer 200 of the first embodiment discussed above is not capable of varying the dot size but takes only either of the two states, the dot-on state or the dot-off state, with regard to each color. The image printing process of the first embodiment thus determines the dot on-off state in the individual pixels immediately after the color conversion. The printer 200 of the third embodiment, however, is capable of varying the dot size and creating three different size dots, that is, the large-size dot, the medium-size dot, and the small-size dot. The image printing process of the third embodiment thus converts the tone data obtained by the color conversion into large-size dot data, medium-size dot data, and small-size dot data with regard to each color (step S604).

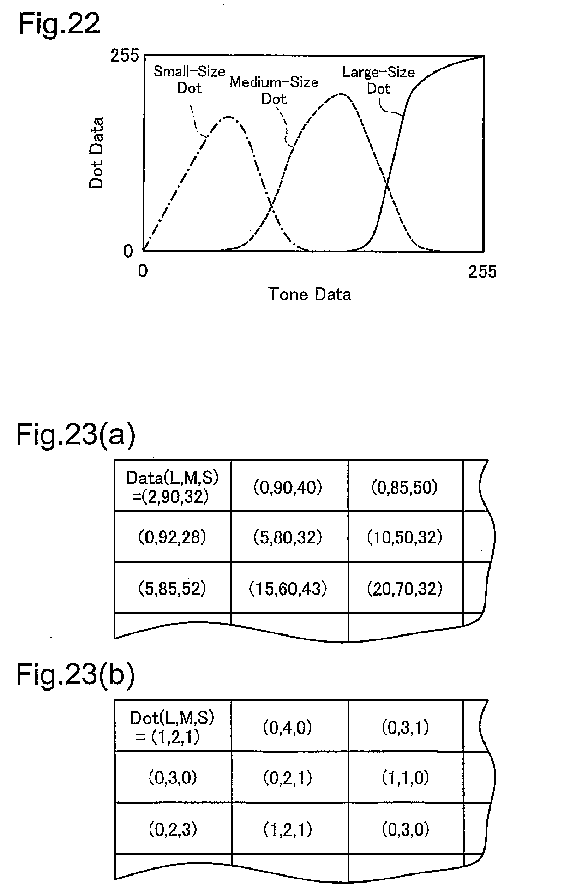

A conversion table shown in Fig. 22 is used for conversion of the tone data into the large-size dot data, the medium-size dot data, and the small-size dot data. The conversion table stores variations in large-size dot data, medium-size dot data, and small-size dot data against the tone data. The tone data after color conversion is further converted by referring to this conversion table.

The large-size dot data, the medium-size dot data, and the small-size dot data respectively go through a resolution conversion process (step S606). Any of diverse methods is applicable to the resolution conversion process. For the simplicity of explanation, the technique of dividing original pixels into smaller pixels is adopted for the resolution conversion like the first embodiment. The tone value allocated to each original pixel is set to all the smaller pixels as divisions of the original pixel.

After conversion of the input resolution into the printing resolution, the resolution-converted data goes through a number data generation process (step S608). In the structure of the third embodiment, the printer 200 is capable of creating the three different size dots, that is, the large-size dot, the medium-size dot, and the small-size dot. The number data generation process of the third embodiment thus generates dot number data with regard to the three different size dots and outputs the generated dot number data to the printer 200.

Fig. 23 shows a process of generating dot number data from dot data according to the number data generation process of the third embodiment. Fig. 23(a) shows settings of dot data with regard to the large-size, medium-size, and small-size dots to the individual pixels included in each pixel group. Each solid rectangle represents one pixel group. Each pixel group includes a predetermined number of multiple pixels, and dot data are actually set to each of the multiple pixels. For the graphic simplicity, however, the individual pixels are omitted from the illustration, and the dot data are set to each pixel group in the illustration. For example, the expression of Data(L,M,S) =(2,90,32) in a pixel group on the upper left corner of Fig. 23(a) means that the large-size dot data '2', the medium-size dot data '90', and the small-size dot data '32' are set to the individual pixels included in this pixel group. As mentioned above in relation to the first embodiment, when all the pixels included in each pixel group have an identical tone value, the resolution conversion process may be omitted and the number data generation process may take charge of the substantial resolution conversion.

The number data generation process of the third embodiment processes the dot data with regard to the respective size dots and generates dot number data as shown in Fig. 23(b). As in the representation of Fig. 23(a), each solid rectangle in Fig. 23(b) represents a pixel group, which includes a predetermined number of multiple pixels. The individual pixels are omitted from the illustration, and the dot number data are generated with respect to each pixel group. For example, the expression of Dot(L,M,S) = (1,2,1) in the pixel group on the upper left corner of Fig. 23(b) means that the dot number data '1', '2', and '1' are generated respectively as the dot numbers of the large-size dot, the medium-size dot, and the small-size dot to be created in this pixel group. The details of the number data generation process of the third embodiment will be discussed later.

The printer 200 receives the dot number data output from the computer 100 and carries out a pixel position determination process (step S610). Since the structure of the third embodiment creates the three different size dots, that is, the large-size dot, the medium-size dot, and the small-size dot, the pixel position determination process determines the positions of dot-on pixels with regard to these three different size dots. The details of the pixel position determination process of the third embodiment will be discussed later.

After determination of the pixel positions for dot formation, the printer 200 repeats the main scans and the sub-scans of the carriage 240 and drives the ink ejection heads to create the large-size dots, the medium-size dots, and the small-size dots on the printing paper (step S612). A resulting image corresponding to image data is thus printed on the printing paper.

### D-2. Number Data Generation Process in Third Embodiment

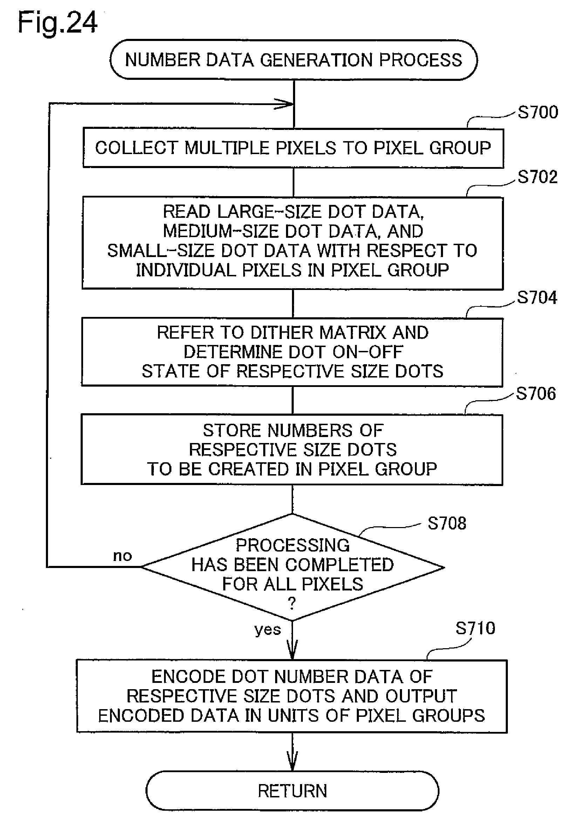

The following describes the details of the number data generation process of the third embodiment. Fig. 24 is a flowchart showing the details of the number data generation process in the third embodiment executed by the CPU of the computer 100.

When the number data generation process of the third embodiment starts, the CPU first collects a predetermined number of multiple pixels in the input image data to one pixel group (step S700). The resolution conversion process (step S606 in the flowchart of Fig. 21) prior to the number data generation process has divided each original pixel into smaller pixels, as in the procedure of the first embodiment. Multiple smaller pixels as divisions of one identical pixel are thus gathered to one pixel group.

The process then reads the large-size dot data, the medium-size dot data, and the small-size dot data with respect to the individual pixels in the pixel group (step S702). The individual pixels included in the pixel group are divisions of an identical original pixel and have an identical tone value. The process may thus read the dot data of only one pixel in the pixel group, instead of reading the dot data of all the individual pixels in the pixel group.

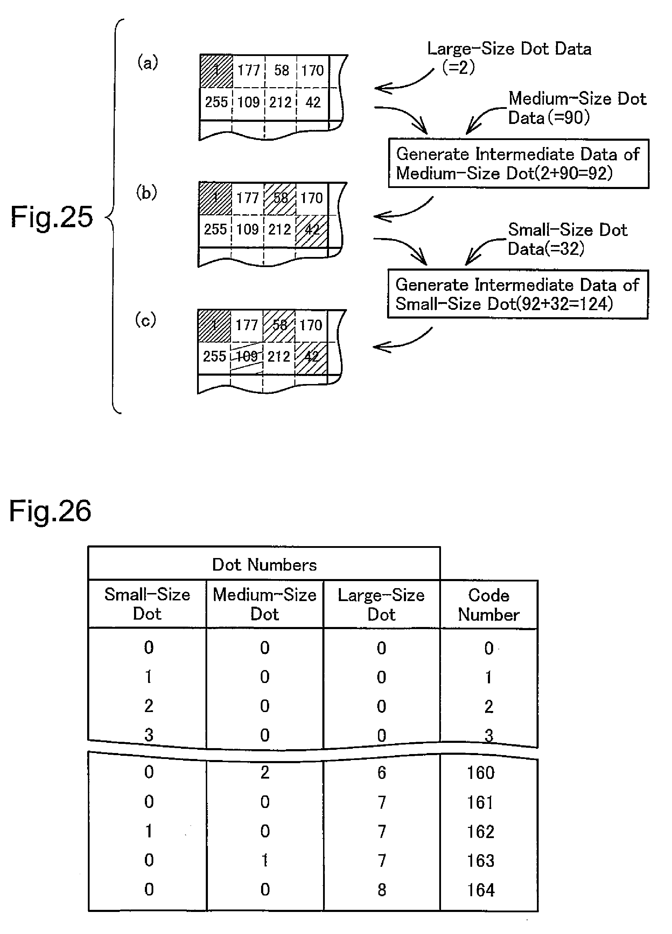

After reading the dot data regarding the respective size dots, the process refers to a dither matrix to determine the dot on-off state with respect to the large-size dot, the medium-size dot, and the small-size dot (step S704). Fig. 25 shows a method of determining the dot on-off state of the large-size dot, the medium-size dot, and the small-size dot in each target pixel by referring to the dither matrix. In the illustrated example of Fig. 25, the dot data to be processed and the dither matrix referred to are respectively those shown in Fig. 23(a) and shown in Fig. 8.

Fig. 25 shows a process of determining the dot on-off state of the three different size dots in a pixel group on the upper left corner of an image. Each rectangle of the thick solid line represents one pixel group, and the divisions of the pixel group by the thin broken lines represent multiple pixels constituting the pixel group. The numeral shown in each pixel is a threshold value set at the corresponding position in the dither matrix.

The method of determining the dot on-off state first compares the large-size dot data with the threshold values set at the corresponding positions in the dither matrix. When the large-size dot data is greater than the corresponding threshold value in a target pixel, a large-size dot is to be created in the target pixel. Fig. 25(a) shows determination of the large-size dot on-off state with regard to the individual pixels in the pixel group. The large-size dot data is '2' in this pixel group. Only in the upper left pixel having the corresponding threshold value '1' of the dither matrix, the large-size dot data '2' is greater than the threshold value. The corresponding threshold values of the dither matrix are greater than the large-size dot data '2' in all the other pixels. Namely only one large-size dot is to be created in this pixel group. The pixel having the threshold value '1' of the dither matrix is filled with dense slant lines in Fig. 25(a). This expresses expected formation of a large-size dot in this pixel.

On completion of determination of the large-size dot on-off state, the method subsequently determines the medium-size dot on-off state. The method adds the medium-size dot data to the large-size dot data to generate intermediate data of the medium-size dot and compares the intermediate data of the medium-size dot with the threshold values set at the corresponding positions in the dither matrix. When the intermediate data of the medium-size dot is greater than the corresponding threshold value in a target pixel, a medium-size dot is to be created in the target pixel. The pixel specified for expected formation of a large-size dot is omitted from the object of determination of the medium-size dot on-off state. In the concrete example of Fig. 25(b), summation of the large-size dot data '2' and the medium-size dot data '90' gives the intermediate data '92' of the medium-size dot. This intermediate data '92' of the medium-size dot is compared with the corresponding threshold values in the dither matrix. The upper left pixel in the pixel group has been determined as the large-size dot-on pixel and is thus omitted from the object of comparison. In the pixels having the corresponding threshold values '42' and '58' of the dither matrix, the intermediate data '92' of the medium-size dot is greater than the respective threshold values. Medium-size dots are thus to be created in these pixels. These pixels are filled with slant lines in Fig. 25(b). This expresses expected formation of medium-size dots in these pixels.

On completion of determination of the medium-size dot on-off state, the method determines the small-size dot on-off state. The method adds the small-size dot data to the intermediate data of the medium-size dot to generate intermediate data of the small-size dot and compares the intermediate data of the small-size dot with the corresponding threshold values of the dither matrix with respect to the remaining pixels that have not been specified as dot-on pixels. When the intermediate data of the small-size dot is greater than the corresponding threshold value in a target pixel, a small-size dot is to be created in the target pixel. In the concrete example of Fig. 25(c), summation of the intermediate data '92' of the medium-size dot and the small-size dot data '32' gives the intermediate data '124' of the small-size dot. This intermediate data '124' of the small-size dot is compared with the corresponding threshold values in the dither matrix. In the pixel having the corresponding threshold value '1 09' of the dither matrix, the intermediate data '124' of the small-size dot is greater than the threshold value. A small-size dot is thus to be created in this pixel, which is filled with sparse slant lines in Fig. 25(c). This expresses expected formation of a small-size dot in this pixel. The process determines the dot on-off state of the large-size dot, the medium-size dot, and the small-size dot with respect to the individual pixels in the pixel group in the above manner at step S704 in the flowchart of Fig. 24.

After determination of the dot on-off state with regard to the respective size dots, the process stores the numbers of the respective size dots to be created in the pixel group (step S706). In the illustrated example of Fig. 25, one large-size dot, two medium-size dots, and one small-size dot are stored as the numbers of the respective size dots to be created in the pixel group.

After storage of the numbers of the respective size dots to be created in the pixel group having the predetermined number of multiple pixels, the process determines whether the processing has been completed with regard to all the pixels included in the input image data (step S708). When there is any unprocessed pixel (step S708: No), the process returns to step S700 to set a next pixel group and repeats the subsequent series of processing. When the processing has been completed with regard to all the pixels included in the input image data (step S708: Yes), the process outputs the numbers of the respective size dots stored in units of pixel groups to the printer 200 (step S710). For further reduction of the data volume output to the printer 200, the dot number data of the respective size dots are encoded as discussed below.

Fig. 26 conceptually shows a conversion table referred to for encoding the dot number data of the respective size dots. The conversion table stores settings of code numbers allocated to respective combinations of the numbers of the large-size dot, the medium-size dot, and the small-size dot. For example, a code number '0' is allocated to a combination of the numbers of the large-size dot, the medium-size dot, and the small-size dot all equal to 0. A code number '1' is allocated to a combination of the number of the small-size dot equal to 1 and the numbers of the large-size dot and the medium-size dot both equal to 0.

Output of the code number representing the numbers of the respective size dots to the printer 200 desirably reduces the output data volume. The reason of data volume reduction is described briefly. Each pixel group consists of 8 pixels, and the maximum number of each size dot is accordingly 8. The dot number data of each size dot accordingly requires a 4-bit data volume. There are three different size dots, so that each pixel group requires a 12-bit data volume. The code numbers range from 0 to 164 as shown in Fig. 26. Each pixel group accordingly requires only an 8-bit data volume for the encoded data. Such encoding thus readily reduces the required data volume to 2/3.

The combinations of the numbers of the respective size dots include many unpractical combinations for actual printing. Allocation of code numbers to these unpractical combinations is naturally not required. Allocation of the code numbers to only practical combinations further reduces the required data volume of each pixel group to be less than 8 bits.

The process encodes the dot number data of the respective size dots and outputs the encoded data to the printer 200 at step S710 in the flowchart of Fig. 24, on this account. After output of the encoded dot number data of the respective size dots in units of pixel groups to the printer 200, the program terminates the number data generation process of the third embodiment and returns to the image printing routine of Fig. 21.

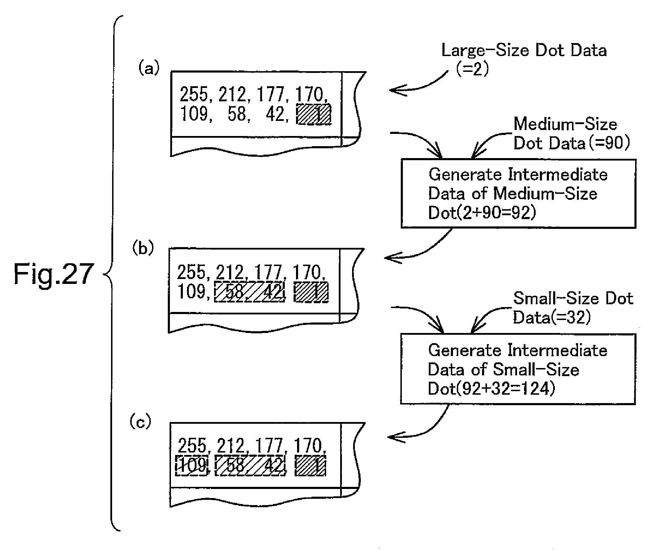

The number data generation process of the third embodiment discussed above determines the dot on-off state of the respective size dots with specification of dot-on pixel positions. The information on specification of dot-on pixel positions is, however, omitted from the transferred data, and only the information on the numbers of the respective size dots to be created in each pixel group is transferred to the printer 200. In view of such omission, the number data generation process may determine the numbers of the respective size dots without specification of dot-on pixel positions, like the first modified example of the first embodiment described above (see Fig. 13). Fig. 27 conceptually shows a process of determining the numbers of the respective size dots without specification of dot-on pixel positions.

The process of Fig. 27 determines the numbers of the respective size dots without specification of the dot-on pixel positions in the pixel group of Fig. 25. A simplified dither matrix is applicable to determine the numbers of multiple different size dots, as in the case of determination of the number of a single size dot. As described previously, while the standard dither matrix stores the threshold values one-to-one mapped to the respective pixel positions, the simplified dither matrix stores the threshold values that are not one-to-one mapped to the respective pixel positions but are collectively mapped to the respective pixel groups. Namely a set of multiple threshold values is one-to-one mapped to one pixel group in the simplified dither matrix. For example, the threshold values in the dither matrix are one-to-one mapped to the respective pixels in the pixel group shown in Fig. 25. In the simplified dither matrix of Fig. 27, on the other hand, a set of threshold values {255,212,177,170,109,58,42,1} is one-to-one mapped to the pixel group. The following describes the method of determining the numbers of the respective size dots without specification of dot-on pixel positions according to the example of Fig. 27.

This modified method sequentially determines the number of the large-size dot, the number of the medium-size dot, and the number of the small-size dot in this order. Fig. 27(a) shows determination of the number of the large-size dot, Fig. 27(b) shows determination of the number of the medium-size dot, and Fig. 27(c) shows determination of the number of the small-size dot. The method first compares the large-size dot data with a set of threshold values mapped to a pixel group. The number of the threshold values smaller than the large-size dot data is given as the number of the large-size dot to be created in this pixel group. In the illustrated example of Fig. 27(a), the large-size dot data is '2', and there is only one threshold value smaller than this large-size dot data '2'. The number of the large-size dot to be created in this pixel group is accordingly 1. The threshold value '1' is covered with dense slant line in Fig. 27(a). This expresses expected formation of a large-size dot for this threshold value.

After determination of the number of the large-size dot, the method adds the medium-size dot data to the large-size dot data to generate intermediate data of the medium-size dot and compares the intermediate data of the medium-size dot with the set of threshold values. The number of the threshold values smaller than the intermediate data of the medium-size dot is given as the number of the medium-size dot to be created in this pixel group. The threshold value set for formation of the large-size dot is omitted from the object of such comparison. In the illustrated example of Fig. 27(b), summation of the large-size dot data '2' and the medium-size dot data '90' gives the intermediate data '92' of the medium-size dot. Except the threshold value '1' set for formation of the large-size dot, there are two threshold values smaller than the intermediate data '92' of the medium-size dot. The number of the medium-size dot to be created in this pixel group is accordingly 2. The threshold values '42' and '58' are covered with slant lines in Fig. 27(b). This expresses expected formation of medium-size dots for these threshold values.

After determination of the number of the medium-size dot, the method adds the small-size dot data to the intermediate data of the medium-size dot to generate intermediate data of the small-size dot and compares the intermediate data of the small-size dot with the set of threshold values to determine the number of the small-size dot to be created in the pixel group. In the illustrated example of Fig. 27(c), summation of the intermediate data '92' of the medium-size dot and the small-size dot data '32' gives the intermediate data '124' of the small-size dot. Among the remaining threshold values that have not been set for dot formation, there is only one threshold value smaller than the intermediate data '124' of the small-size dot. The number of the small-size dot to be created in this pixel group is accordingly 1. The threshold value '109' is covered with sparse slant lines in Fig. 27(c). This expresses expected formation of a small-size dot for this threshold value.

This modified method refers to the simplified dither matrix and determines the numbers of the respective size dots without specification of dot-on pixel positions. The numbers of the respective size dots are determined by simple comparison of the dot data or the intermediate data with the set of threshold values. This method does not require comparison between the dot data with the individual threshold values allocated to the respective pixels. This ensures quicker generation of the dot number data with regard to the respective size dots.

### D-3. Pixel Position Determination Process of Third Embodiment

As described above, the number data generation process of the third embodiment generates the dot number data representing the numbers of the respective size dots to be created in each pixel group and transfers the dot number data to the printer 200. The printer 200 receives the transferred data, determines the positions of the dot-on pixels of the respective size dots, and creates the respective size dots to print a result image on the printing paper. The following describes the procedure of determining the positions of the dot-on pixels of the respective size dots according to the dot number data.

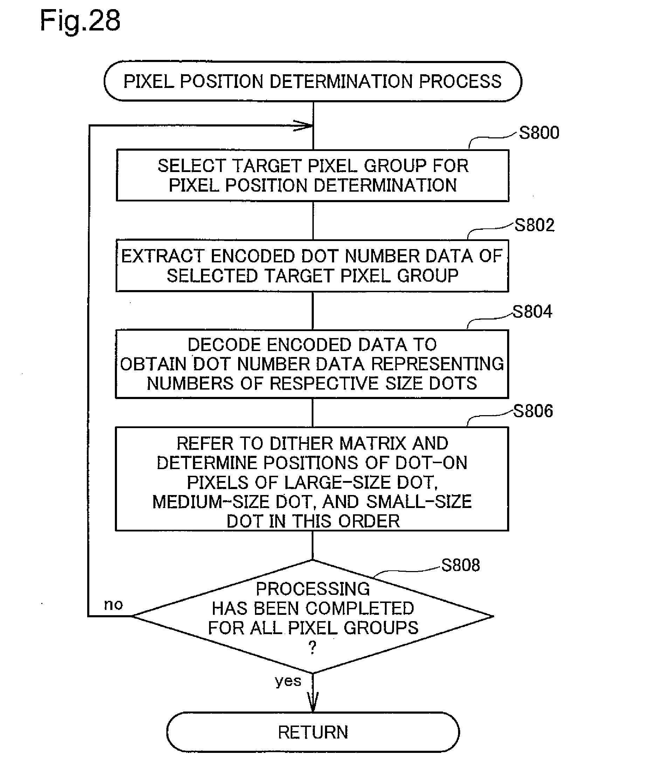

Fig. 28 is a flowchart showing the details of the pixel position determination process in the third embodiment executed by the CPU of the control circuit 260 in the printer 200.

The pixel position determination process of the third embodiment first selects a target pixel group as an object of pixel position determination (step S800) and extracts data of the selected target pixel group from the transferred data (step S802). The dot number data have been encoded prior to transfer as mentioned previously in relation to Fig. 26. The process accordingly decodes the encoded data to the dot number data representing the numbers of the respective size dots to be created in the target pixel group (step S804).

The method refers to the conversion table shown in Fig. 26 and obtains the decoded data corresponding to the code number. For example, when the encoded data is '162', the dot numbers corresponding to the code number '162' are read from the conversion table. Namely the encoded data '162' is decoded to the dot number data representing seven large-size dots, zero medium-size dot, and one small-size dot.

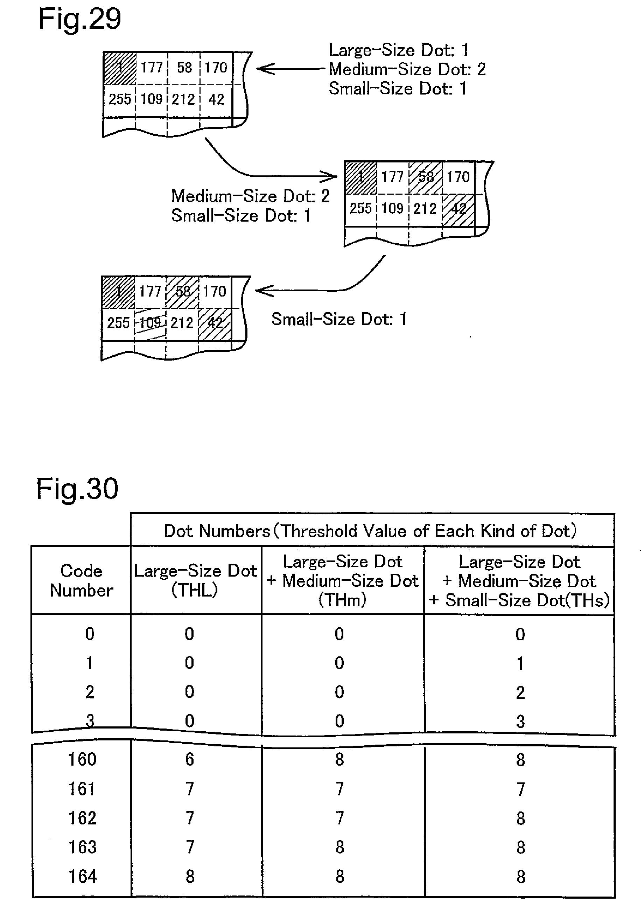

After obtaining the decoded dot number data representing the numbers of the respective size dots, the process refers to a dither matrix to determine the positions of the dot-on pixels of the respective size dots (step S806). The concrete procedure of determination is discussed below with reference to Fig. 29.

Fig. 29 shows a process of determining the positions of the dot-on pixels of the respective size dots according to given dot number data of the respective size dots in one pixel group by referring to the dither matrix. Each rectangle of the thick solid line represents one pixel group, and the divisions of the pixel group by the thin broken lines represent multiple pixels constituting the pixel group. The numeral shown in each pixel is a threshold value set at the corresponding position in the dither matrix. The dither matrix used here is identical with the dither matrix used for determination of the numbers of the respective size dots.

In this illustrated example, it is assumed that one large-size dot, two medium-size dots, and one small-size dot are to be created in the pixel group. The method first determines the positions of the large-size dot-on pixels. As mentioned previously, the threshold values in the dither matrix show the potential for dot formation. One large-size dot is thus to be created in the pixel having the smallest threshold value. The method determines the positions of the medium-size dot-on pixels after determination of the positions of the large-size dot-on pixels. Two medium-size dots are to be created, while the pixel having the smallest threshold value has already been set for formation of the large-size dot. Two medium-size dots are thus to be created in the pixels having the second smallest threshold value and the third smallest threshold value. The method determines the positions of the small-size dot-on pixels after determination of the positions of the medium-size dot-on pixels. One small-size dot is to be created, while the pixels having the smallest, the second smallest, and the third smallest threshold values have already been set for formation of the large-size dot and the medium-size dot. One small-size dot is thus to be created in the pixel having the fourth smallest threshold value.

In the illustrated example of Fig. 29, the positions of the dot-on pixels are determined in the order of the large-size dot, the medium-size dot, and the small-size dot. The pixel filled with dense slant lines denotes the pixel set for formation of a large-size dot. The pixels filled with slant lines denote the pixels set for formation of medium-size dots. The pixel filled with sparse slant lines denotes the pixel set for formation of a small-size dot. The process refers to the dither matrix and determines the positions of the dot-on pixels with regard to the respective size dots at step S806 in the flowchart of Fig. 28.

After determination of the positions of the dot-on pixels with regard to the respective size dots in one pixel group, the process determines whether the pixel position determination has been completed for the data of all the pixel groups received from the computer 100 (step S808). When there is any unprocessed pixel group (step S808: No), the process returns to step S800 to set a next pixel group and repeats the subsequent series of processing. When the dot-on pixel positions have been determined for all the pixel groups (step S808: Yes), the program terminates the pixel position determination process of Fig. 28 and goes back to the image printing routine. The printer 200 then creates the respective size dots on the printing paper to print a resulting processed image according to the image data.

The image printing process of the third embodiment discussed above is effectively applied to the printer 200 as the multi-valued printer. The printer 200 receives the dot number data of the respective size dots transferred from the computer 100 and prints a resulting processed image according to the transferred data. This arrangement attains quicker data transfer, compared with the method of transferring the dot state data representing the dot on-off state of the individual pixels. Even when an image includes a large number of pixels, the procedure of the third embodiment thus ensures high-speed image printing.

### D-4. Modified Examples

The pixel position determination process of the third embodiment may be modified in various ways. Some examples of possible modification are discussed briefly below.

### (1) First Modified Example

The pixel position determination process of the third embodiment decodes the encoded data to the dot number data representing the numbers of the respective size dots. As mentioned above, the positions of the dot-on pixels are determined in the order of the large-size dot, the medium-size dot, and the small-size dot. The encoded data may thus be decoded to data representing the number of the large-size dot, the total number of the large-size dot and the medium-size dot, and the total number of all the large-size dot, the medium-size dot, and the small-size dot, instead of the dot number data representing the numbers of the respective size dots. For example, in the illustrated example of Fig. 29, the encoded data is decoded to data representing {the number of the large-size dot: 1, the total number of the large-size dot and the medium-size dot: 3, the total number of the large-size dot, the medium-size dot, and the small-size dot: 4}, instead of the dot number data representing {the number of the large-size dot: 1, the number of the medium-size dot: 2, the number of the small-size dot: 1}.

Fig. 30 conceptually shows a decoding table referred to for such modified decoding. This modified decoding method ensures the quick determination of the dot-on pixel positions. A modified pixel position determination process is described below as a first modified example.

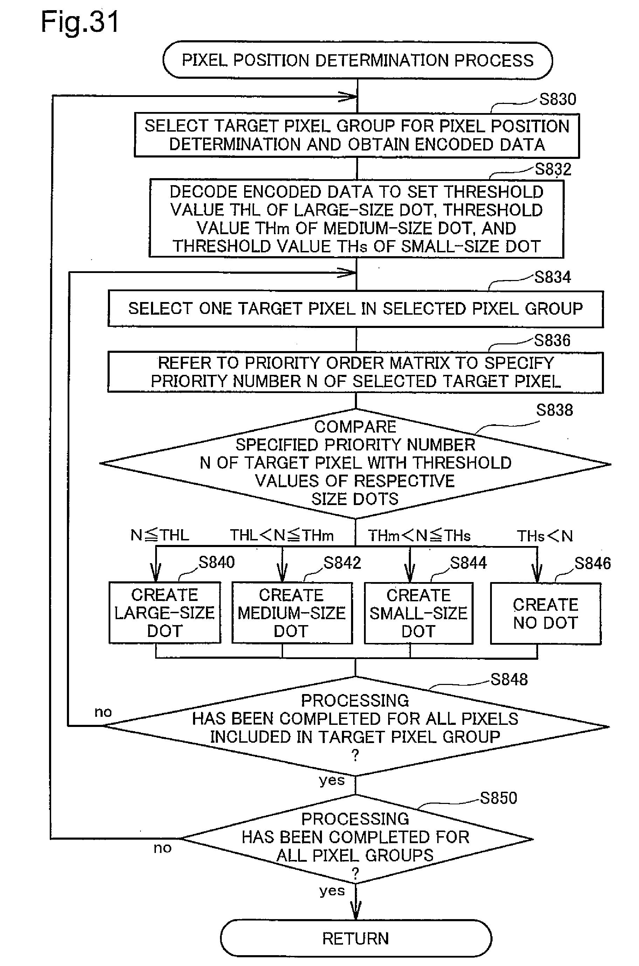

Fig. 31 is a flowchart showing the details of the pixel position determination process in the first modified example of the third embodiment. In the pixel position determination process of the first modified example, the processing flow first selects a target pixel group as an object of pixel position determination and obtains dot number data of the selected target pixel group (step S830). The dot number data has been encoded for transfer in the number data generation process described above.

The decoding table shown in Fig. 30 is used to decode the encoded dot number data into the number of the large-size dot, the total number of the large-size dot and the medium-size dot, and the total number of the large-size dot, the medium-size dot, and the small-size dot. The number of the large size dot, the total number of the large-size dot and the medium-size dot, and the total number of the large-size dot, the medium-side dot, and the small-size dot are respectively set to a threshold value THL of the large-size dot, a threshold value THm of the medium-size dot, and a threshold value THs of the small-size dot (step S832).

After decoding to the threshold values of the respective size dots, the processing flow selects one target pixel in the selected target pixel group (step S834) and refers to a priority order matrix to specify a priority number N of the selected target pixel (step S836). The specified priority number N of the target pixel is successively compared with the threshold values THL, THm, and THs of the respective size dots (step S838). A large-size dot is to be created in the pixel having the priority number N of not greater than the threshold value THL of the large-size dot (step S840). A medium-size dot is to be created in the pixel having the priority number N of greater than the threshold value THL of the large-size dot but not greater than the threshold value THm of the medium-size dot (step S842). A small-size dot is to be created in the pixel having the priority number N of greater than the threshold value THm of the medium-size dot but not greater than the threshold value THs of the small-size dot (step S844). No dot is to be created in the pixel having the priority number N of greater than the threshold value THs of the small-size dot (step S846).

For example, it is assumed that the threshold value THL of the large-size dot, the threshold value THm of the medium-size dot, and the threshold value THs of the small-size dot are respectively equal to 2, 3, and 5 in one pixel group. Two large-size dots are to be created in this pixel group. The large-size dot is accordingly created in a pixel having the highest potential for dot formation (that is, a pixel having a first priority number) and in a pixel having the second highest potential for dot formation (that is, a pixel having a second priority number). It is thus determined that the large-size dot is to be created in the pixel having the priority number N of not greater than the threshold value THL of the large-size dot. One medium-size dot is to be created in this pixel group since the threshold value THL of the large-size dot is 2 and the threshold value THm of the medium-size dot is 3. The pixels having the first priority number and the second priority number have already been selected for formation of the large-size dot. The medium-size dot is accordingly created in a pixel having a third priority number. It is thus determined that the medium-size dot is to be created in the pixel having the priority number N of greater than the threshold value THL of the large-size dot but not greater than the threshold value THm of the medium-size dot. Two small-size dots are to be created in this pixel group. It is thus determined that the small-size dot is to be created in the pixel having the priority number N of greater than the threshold value THm of the medium-size dot but not greater than the threshold value THs of the small-size dot. It is then determined that no dot is to be created in the pixel having the priority number N of greater than the threshold value THs of the small-size dot.

After specification of the dot type to be created in the selected target pixel, it is determined whether specification of the dot type has been completed with regard to all the pixels included in the selected target pixel group (step S848). When the selected pixel group has any unprocessed pixel (step S848: no), the processing flow returns to step S834 to select a next target pixel and repeats the subsequent series of processing. Repetition of this processing specifies the dot type with regard to all the pixels included in the selected pixel group (step S848: yes). Namely the positions of dot-on pixels of the respective size dots are determined with regard to the selected pixel group. It is then determined whether determination of dot-on pixel positions of the respective size dots has been completed for all pixel groups (step S850). When there is any unprocessed pixel group (step S850: no), the processing flow returns to step S830 and repeats the subsequent series of processing. Repetition of this processing determines the positions of dot-on pixels of the respective size dots with regard to all the pixel groups (step S850: yes). This terminates the pixel position determination process of the first modified example shown in Fig. 31.

As described above, the pixel position determination process of the first modified example decodes the encoded dot number data into the number of the large-size dot, the total number of the large-size dot and the medium-size dot, and the total number of the large-size dot, the medium-size dot, and the small-size dot as shown in Fig. 30. These decoded values are used as threshold values. Comparison between the specified priority number of each pixel and the threshold values immediately specifies the dot type to be created in the pixel.

### (2) Second Modified Example

Another decoding technique may be adopted to determine the positions of dot-on pixels of the respective size dots in each pixel group without the comparison discussed above. This technique is described below as a second modified example.

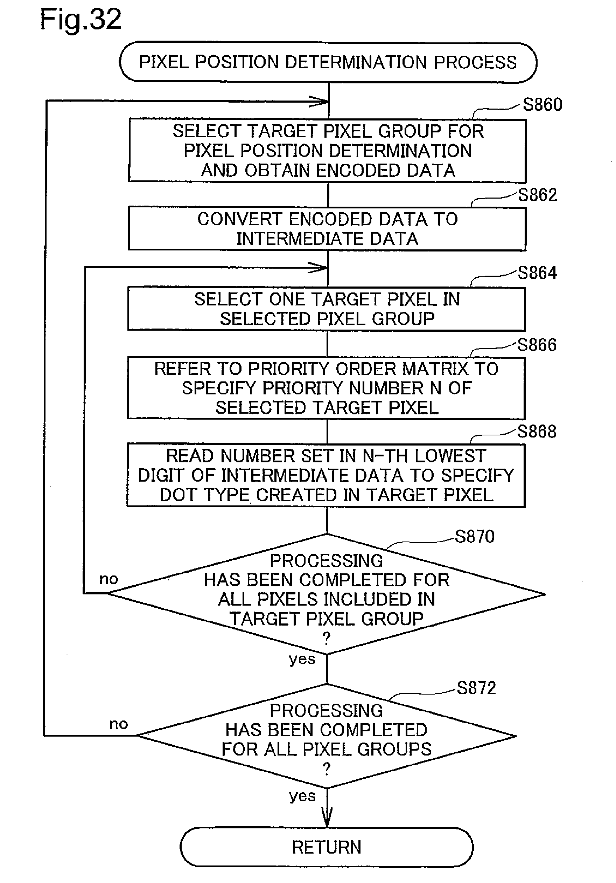

Fig. 32 is a flowchart showing the details of a pixel position determination process in the second modified example of the third embodiment. In the pixel position determination process of the second modified example, the processing flow first selects a target pixel group as an object of pixel position determination and obtains encoded dot number data of the selected target pixel group (step S860).

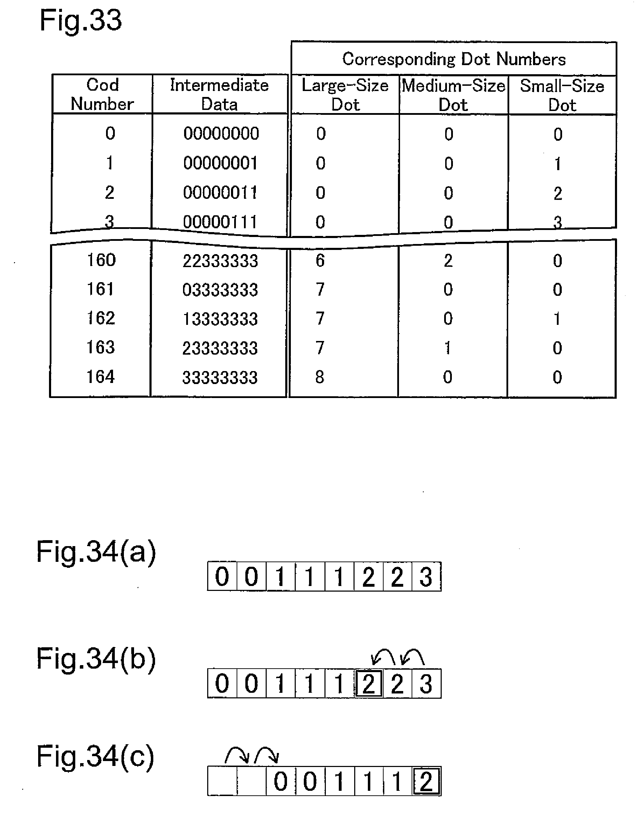

A decoding table shown in Fig. 33 is used to decode the encoded dot number data into intermediate data. As shown in Fig. 33, the intermediate data is an 8-digit sequence. This 8-digit sequence is occupied sequentially from the lowest digit with a number representing the large-size dot ('3' in this example), a number representing the medium-size dot ('2' in this example), a number representing the small-size dot ('1' in this example), and a number representing no dot formation ('0' in this example). For example, it is assumed that one large-size dot, two medium-size dots, and three small-size dots are to be created in one pixel group. The number '3' representing the large-size dot is set to the lowest digit, the number '2' representing the medium-size dot is set to the second lowest and the third lowest digits, and the number '1' representing the small-size dot is set to the fourth through the sixth lowest digits. The residual digits are occupied with the number '0' representing no dot formation. The intermediate data is accordingly given as the 8-digit sequence '00111223' as shown in Fig. 34(a). Namely this intermediate data represents a combination of one large-size dot, two medium-size dots, and three small-size dots. The decoding table of Fig. 33 shows a mapping of the encoded dot number data to the intermediate data. The processing flow converts the encoded dot number data to intermediate data by referring to this mapping at step S862 in the flowchart of Fig. 32. The intermediate data is expressed as an 8-digit sequence, since each pixel group consists of 8 pixels. When each pixel group consists of K pixels, the intermediate data is expressed as a K-digit sequence.

The processing flow subsequently selects one target pixel in the selected target pixel group (step S864) and refers to a priority order matrix to specify a priority number N of the selected target pixel (step S866). The processing flow extracts the number set in an N-th lowest digit of the converted intermediate data and specifies the dot type to be created in the target pixel based on the extracted number (step S868). For example, when the intermediate data of a target pixel group is the 8-digit sequence shown in Fig. 34(a) and the priority number N of a selected target pixel is 3, the number '2' is read from the third lowest digit of the intermediate data. It is accordingly determined that a medium-size dot is to be created in the target pixel. Fig. 34(b) conceptually shows extraction of the number set in the third lowest digit to specify formation of the medium-size dot in the pixel.

After specification of the dot type to be created in one target pixel selected in the target pixel group, it is determined whether specification of the dot type has been completed with regard to all the pixels included in the selected target pixel group (step S870). When the selected pixel group has any unprocessed pixel (step S870: no), the processing flow returns to step S864 to select a next target pixel in the target pixel group and repeats the subsequent series of processing. Repetition of this processing specifies the dot type with regard to all the pixels included in the selected pixel group (step S870: yes). Namely the positions of dot-on pixels of the respective size dots are determined with regard to the selected pixel group. It is then determined whether determination of dot-on pixel positions of the respective size dots has been completed for all pixel groups (step S872). When there is any unprocessed pixel group (step S872: no), the processing flow returns to step S860 and repeats the subsequent series of processing. Repetition of this processing determines the positions of dot-on pixels of the respective size dots with regard to all the pixel groups (step S872: yes). This terminates the pixel position determination process of the second modified example shown in Fig. 32.

As described above, the pixel position determination process of the second modified example converts the encoded dot number data into the intermediate data representing the numbers of the respective size dots as shown in Fig. 33 and reads the number set in a digit corresponding to a specified priority number of each pixel to specify the dot type to be created in the pixel. This method requires only the extremely simple operation of reading the number set in a specified position of the intermediate data to determine the dot type created in each pixel.

The pixel position determination process of the second modified example does not require the conditional judgment to specify the dot type created in each pixel, unlike the other embodiments discussed previously. As a recent trend, the pipeline processing technique has been adopted for the high-speed computer processing. Application of the pipeline processing technique to a processing flow including conditional judgment, however, does not significantly improve the processing speed and may even lower the processing speed in some cases. The pixel position determination process of the second modified example specifies the dot type to be created in each pixel without such conditional judgment. This assures exertion of the effects of the pipeline processing technique and is thus suitable for the high-speed processing.

The pixel position determination process of the second modified example reads the number set in a place of the intermediate data corresponding to the specified priority number of each pixel. One possible modification may fix a reading place in the intermediate data. The modified procedure shifts the intermediate data and then reads the number set in a place corresponding to the specified priority number of each pixel. This modification is explained with reference to Fig. 34. When the specified priority number of a target pixel is 3, the dot type to be created in the target pixel is specified by the number set in the third lowest digit of the intermediate data (see Fig. 34(b)). The modified procedure shifts the intermediate data rightward by two digits to generate data shown in Fig. 34(c) and reads the number set in the lowest digit. When the priority number of a target pixel is N, the procedure shifts the intermediate data rightward by (N-1) digits and then reads the number set in the lowest digit. This modified method fixes the reading place in the intermediate data, while shifting the intermediate data. The shift of the intermediate data requires only a very short time. This method of reading the number from a fixed place thus ensures the simple and high-speed specification of the dot type to be created in each pixel.

### E. Modifications

The technique of the invention is not restricted to the embodiments or their modified examples discussed above. There may be diversity of other modifications. Some examples of possible modification are described briefly below.

### (1) First Modified Example

The number data generation process in any of the above embodiments applies the dither method to determine the dot on-off state. Any other technique may alternatively be adopted for determination of the dot number to attain the adequate density according to the tone values of the image data.

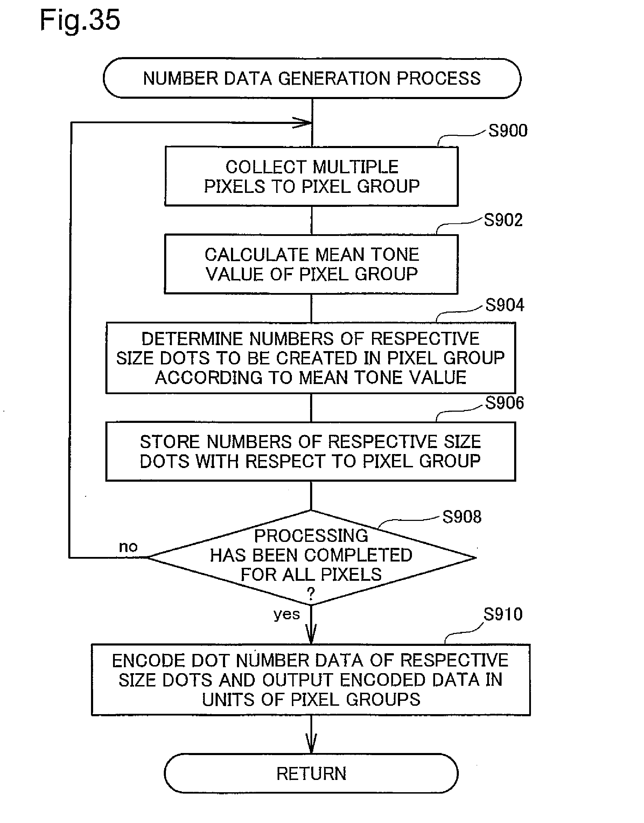

For example, one modified example may adopt a number data generation process shown in Fig. 35 to calculate a mean tone value of respective pixels included in each pixel group and unequivocally determine the numbers of respective size dots to be created in the pixel group according to the calculated mean tone value. The procedure of this modified example is briefly described with reference to the flowchart of Fig. 35.

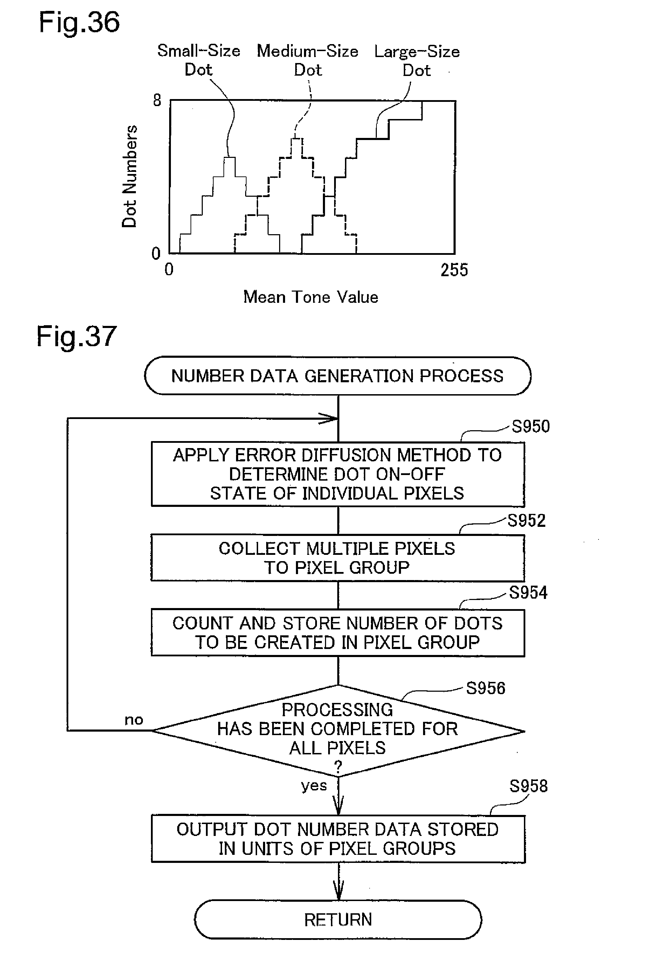

The number data generation process of this modified example first collects a predetermined number of multiple pixels to one pixel group (step S900) and calculates a mean tone value of the respective pixels included in the pixel group (step S902). The process then unequivocally determines the numbers of the respective size dots to be created in the pixel group according to the calculated mean tone value. A concrete procedure sets variations in numbers of the respective size dots to be created in one pixel group against the mean tone value as shown in the map of Fig. 36. The procedure reads the numbers of the respective size dots corresponding to the given mean tone value of the pixel group from this map. The map of Fig. 36 shows the variations in numbers of the three different size dots, but there may be a greater or less number of variable-size dots.

The process stores the determined numbers of the respective size dots with respect to the pixel group (step S906) and determines whether the processing has been completed for all the pixels (step S908). When there is any unprocessed pixel, the process returns to step S900 and repeats the subsequent series of processing. When the processing of all the pixels has been completed, on the other hand, the process encodes the stored numbers of the respective size dots according to the method of Fig. 30 discussed above and outputs the encoded dot number data to the printer 200 (step S910).

The printer 200 receives the dot number data output from the computer 100 and executes the pixel position determination process discussed above to print a resulting processed image. The procedure of this modified example readily generates the dot number data with regard to each pixel group. This arrangement ensures quick output of the dot number data and thereby high-speed image printing.

### (2) Second Modified Example

In any of the above embodiments, the number data generation process first collects a predetermined number of multiple pixels to one pixel group and then determines the number of dots to be created in the pixel group. One modified procedure may first determine the dot on-off state of individual pixels and then collect every predetermined number of multiple pixels to one pixel group.

For example, a modified process shown in the flowchart of Fig. 37 applies an error diffusion method to determine the dot on-off state of all the pixels included in the input image data (step S950). The modified process then collects a predetermined number of multiple pixels to one pixel group (step S952), and counts and stores the number of dots to be created in the pixel group (step S954).

After storage of the dot number data with regard to one pixel group, the process determines whether the processing has been completed for all the pixels (step S956). When there is any unprocessed pixel, the process goes back to step S900 and repeats the above series of processing. When the processing of all the pixels has been completed, on the other hand, the process outputs the dot number data stored in units of pixel groups to the printer 200 (step S958).

The printer 200 receives the dot number data output from the computer 100 and executes the pixel position determination process described above to determine the positions of the dot-on pixels in each pixel group. The modified procedure of Fig. 37 adopts the error diffusion method for determination of the number of dots to be created in each pixel group. This procedure may refer to the dither matrix to determine the positions of the dot-on pixels.

As is known in the art, application of the error diffusion method to determine the dot on-off state gives the substantially noise-free, good picture quality in an area of the low dot formation density. The error diffusion method is especially effective for printing an image of the low dot formation density, for example, where pixel groups with dot formation are sparsely distributed among a large number of pixels groups with no dot formation. Determination of the number of dots to be created in each pixel group according to the error diffusion method enables the dots to be adequately distributed and gives a high-quality resulting image.

### (3) Third Modified Example

Any of the embodiments discussed above determines the positions of the dot-on pixels by referring to the dither matrix. The method of using the priority order matrix for the pixel position determination does not directly refer to the dither matrix but indirectly uses the dither matrix to determine the positions of the dot-on pixels, since the priority order matrix is prepared corresponding to the dither matrix. Such dependence on the dither matrix is, however, not essential as long as the positions of the dot-on pixels are determinable with different settings of the priority order to the respective pixel groups.

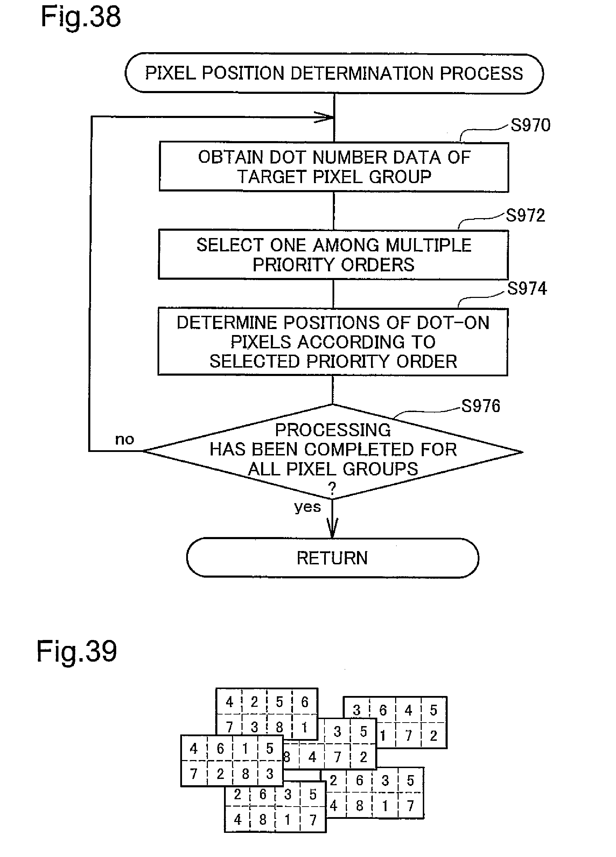

For example, a modified process shown in the flowchart of Fig. 38 stores multiple priority orders and selects an arbitrary priority order for each pixel group among the stored multiple priority orders to determine the positions of the dot-on pixels. The procedure of this modified example is briefly described with reference to the flowchart of Fig. 38.

When the pixel position determination process of this modified example starts, the CPU of the control circuit 260 in the printer 200 first selects a target pixel group as an object of the pixel position determination and obtains the dot number data of the selected target pixel group (step S970). The process then selects arbitrary one among multiple priority orders stored in advance (step S972). The multiple priority orders of respective pixels in each pixel group have been stored in the ROM of the control circuit 260. Fig. 39 shows multiple priority orders stored in the ROM. The process selects one of the multiple priority orders at step S972.

The process refers to the selected priority order and determines the positions of the dot-on pixels in the target pixel group (step S974). After determination of the positions of the dot-on pixels in one pixel group, the process determines whether the processing has been completed for all the pixel groups (step S976). When there is any unprocessed pixel group, the process goes back to step S970 and repeats the above series of processing to determine the positions of the dot-on pixels in a next target pixel group. This series of processing is repeated until the processing of all the pixel groups has been completed.

The procedure of this modified example determines the positions of the dot-on pixels according to the dot number data of each pixel group. Different priority orders are generally selected for the individual pixel groups to be referred to for determination of the positions of the dot-on pixels. This arrangement prevents dot formation in an identical pattern and thus desirably avoids potential deterioration of the picture quality.

The embodiments and their modified examples discussed above are to be considered in all aspects as illustrative and not restrictive. There may be many other modifications, changes, and alterations without departing from the scope or spirit of the main characteristics of the present invention.
For example, the software programs (application programs) that attain the diverse functions discussed above may be supplied to the main memory of the computer system or to an external storage device via a communication line and be executed by the computer system. The software programs may otherwise be read from CD-ROMs or flexible disks to be executed.

The embodiments and the modified examples discussed above regard the printers that create dots to print an image on printing paper. The technique of the invention is, however, not restricted to the printers but is also effectively applicable to liquid crystal display devices that disperse luminescent spots at an adequate density on a liquid crystal display screen to express an image of continuously varying tone.

## Claims

1. An image output control system comprising an image processing device that makes image data subjected to a preset series of image processing and an image output device that creates dots according to a result of the preset series of image processing to output an image,
said image processing device comprising:
a dot number specification module that collects a predetermined number of plural pixels, among a large number of pixels constituting the image, to each pixel group and specifies number of dots to be created in each pixel group according to the image data; and
a number data supply module that supplies dot number data representing the number of dots specified with regard to each pixel group to said image output device,
said image output device comprising:
a number data receiving module that receives the dot number data with regard to each pixel group;
a priority order selection module that selects a priority order of pixels for dot formation in each pixel group;
a pixel position determination module that determines position of each dot-on pixel included in each pixel group, based on the received dot number data and the selected priority order; and
a dot formation module that actually creates a dot at the determined position of each dot-on pixel.

2. An image output control system in accordance with claim 1, wherein said priority order selection module selects one priority order for each pixel group, among multiple priority orders prepared in advance.

3. An image output control system in accordance with claim 1, wherein said number data supply module encodes the dot number data and supplies the encoded dot number data,
said number data receiving module receives the encoded dot number data and decodes the encoded dot number data to the number of dots to be created in each pixel group, and
said pixel position determination module determines the position of each dot-on pixel included in each pixel group, based on the decoded dot number data and the selected priority order.

4. An image output control system in accordance with claim 1, wherein said dot number specification module refers to a dither matrix, which maps threshold values to respective pixels arranged in a two-dimensional array, and specifies the number of dots to be created in each pixel group, and
said priority order selection module divides the dither matrix referred to for the dot number specification into multiple groups corresponding to multiple pixel groups, specifies a priority order of pixels in each pixel group based on a result of comparison between the image data of respective pixels included in the pixel group and corresponding threshold values, and stores the specified priority orders of the multiple pixel groups as the multiple priority orders,
said priority order selection module selecting one priority order corresponding to a position of each pixel group in the image, among the multiple priority orders based on the dither matrix.

5. An image output device that receives processed image data, which has gone through a preset series of image processing, and creates dots according to the received image data to output an image, said image output device comprising:
a number data receiving module that receives dot number data representing number of dots to be created in each pixel group, as the image data, where the pixel group includes a predetermined number of plural pixels collected among a large number of pixels constituting the image;
a priority order selection module that selects a priority order of pixels for dot formation in each pixel group;
a pixel position determination module that determines position of each dot-on pixel included in each pixel group, based on the received dot number data and the selected priority order; and
a dot formation module that actually creates a dot at the determined position of each dot-on pixel.

6. An image output device in accordance with claim 5, wherein said priority order selection module selects one priority order for each pixel group, among multiple priority orders prepared in advance.

7. An image output device in accordance with claim 5, wherein said number data receiving module receives encoded dot number data and decodes the encoded dot number data to the number of dots to be created in each pixel group, and
said pixel position determination module determines the position of each dot-on pixel included in each pixel group, based on the decoded dot number data and the selected priority order.

8. An image output device in accordance with claim 5, wherein said number data receiving module receives the dot number data in each pixel group of plural pixels that are adjacent to one another and have a preset positional relation.

9. An image output device in accordance with claim 7, wherein said priority order selection module stores the multiple priority orders in the form of a priority order matrix that arranges the multiple priority orders in a preset two-dimensional array,
said priority order selection module selecting one priority order corresponding to a position of each pixel group in the image, among the multiple priority orders stored in the priority order matrix.

10. An image output device in accordance with claim 9, wherein said priority order selection module divides a dither matrix, which maps threshold values to respective pixels arranged in a two-dimensional array, into multiple groups corresponding to multiple pixel groups, specifies a priority order of pixels in each pixel group based on a result of comparison between the image data of respective pixels included in the pixel group and corresponding threshold values, and stores the specified priority orders of the multiple pixel groups in the form of the priority order matrix.

11. An image output device in accordance with claim 5, wherein said pixel position determination module comprises:
a priority number specification module that specifies a priority number of each pixel for dot formation in each pixel group according to the selected priority order; and
a pixel position detection module that detects the position of each dot-on pixel included in each pixel group, based on the dot number data of the pixel group and the priority numbers of respective pixels in the pixel group.

12. An image output device in accordance with claim 5, wherein said pixel position determination module comprises:
an intermediate data generation module that generates intermediate data from the dot number data of one pixel group, where the pixel group consists of N pixels, the number of dots to be created in the pixel group is equal to M, and the intermediate data of the pixel group includes M consecutive data elements representing dot formation and (N-M) consecutive data elements representing no dot formation; and
a pixel position detection module that specifies a priority number of each pixel for dot formation in the pixel group according to the selected priority order and reads a relevant data element of the intermediate data corresponding to the priority number of each pixel in the pixel group, so as to detect the position of each dot-on pixel in the pixel group.

13. An image output device in accordance with claim 12, wherein said pixel position detection module shifts the intermediate data by a number of data elements corresponding to the priority number of each pixel in a direction of the data elements representing dot formation and reads a data element at an end of the shifted intermediate data, so as to detect the position of each dot-on pixel.

14. An image processing device that causes input image data representing an image to go through a preset series of image processing and thereby generates control data, which is used for control of dot formation by an image output device that creates dots and outputs a resulting processed image, said image processing device comprising:
a pixel group setting module that collects a predetermined number of plural pixels, among a large number of pixels constituting the image, to each pixel group;
a dot number specification module that causes at least a plurality of the pixel groups to have different relations between the image data of each pixel group and number of dots to be created in the pixel group, and specifies number of dots to be created in each pixel group according to the image data of the pixel group; and
a number data supply module that supplies dot number data representing the number of dots specified with regard to each pixel group as the control data to said image output device.

15. An image processing device in accordance with claim 14, wherein said dot number specification module comprises:
a relation storage module that stores multiple relations between the image data of each pixel group and the number of dots to be created in the pixel group; and
a specification module that refers to one of the multiple relations and specifies the number of dots to be created in each pixel group according to the image data of respective pixels included in the pixel group.

16. An image processing device in accordance with either one of claims 14 and 15, wherein said number data supply module encodes the dot number data and supplies the encoded dot number data as the control data.

17. An image processing device in accordance with claim 14, wherein said pixel group setting module divides the image into multiple pixel groups by collecting the predetermined number of plural pixels to each pixel group, and
said dot number specification module specifies the number of dots to be created in each pixel group according to the image data of respective pixels included in the pixel group.

18. An image processing device in accordance with claim 14, wherein said dot number specification module specifies the number of dots to be created in each pixel group, such that tone errors relative to the image data caused by the dot number specification are cancelled each other between at least plural pixel groups within a preset range.

19. An image processing device that causes input image data representing an image to go through a preset series of image processing and thereby generates control data, which is used for control of dot formation by an image output device that creates dots and outputs a resulting processed image, said image processing device comprising:
a dither matrix storage module that stores a dither matrix, which maps threshold values to respective pixels arranged in a two-dimensional array;
a pixel group setting module that collects a predetermined number of plural pixels, among a large number of pixels constituting the image, to each pixel group;
a dot number specification module that compares the image data of respective pixels included in each pixel group with threshold values set at corresponding positions in the dither matrix, so as to specify number of dots to be created in the pixel group; and
a number data supply module that supplies dot number data representing the number of dots specified with regard to each pixel group as the control data to said image output device.

20. An image output control method that makes image data subjected to a preset series of image processing and creates dots according to a result of the preset series of image processing to output an image,
said image output control method comprising:
a first step of collecting a predetermined number of plural pixels, among a large number of pixels constituting the image, to each pixel group and specifying number of dots to be created in each pixel group according to the image data;
a second step of selecting a priority order of pixels for dot formation in each pixel group;
a third step of determining position of each dot-on pixel included in each pixel group, based on the specified number of dots and the selected priority order of the pixel group; and
a fourth step of actually creating a dot at the determined position of each dot-on pixel.

21. An image output control method in accordance with claim 20, wherein said first step refers to a dither matrix, which maps threshold values to respective pixels arranged in a two-dimensional array, and specifies the number of dots to be created in each pixel group, and
said second step divides the dither matrix referred to for the dot number specification into multiple groups corresponding to multiple pixel groups, specifies a priority order of pixels in each pixel group based on a result of comparison between the image data of respective pixels included in the pixel group and corresponding threshold values, and stores the specified priority orders of the multiple pixel groups,
said second step selecting one priority order corresponding to a position of each pixel group in the image, among multiple priority orders stored with regard to the multiple groups of the dither matrix.

22. An image output method that receives processed image data, which has gone through a preset series of image processing, and creates dots according to the received image data to output an image, said image output method comprising the steps of:
(A) receiving dot number data representing number of dots to be created in each pixel group, as the image data, where the pixel group includes a predetermined number of plural pixels collected among a large number of pixels constituting the image;
(B) selecting a priority order of pixels for dot formation in each pixel group;
(C) determining position of each dot-on pixel included in each pixel group, based on the received dot number data and the selected priority order; and
(D) actually creating a dot at the determined position of each dot-on pixel.

23. An image processing method that causes input image data representing an image to go through a preset series of image processing and thereby generates control data, which is used for control of dot formation by an image output device that creates dots and outputs a resulting processed image, said image processing method comprising the steps of:
(a) collecting a predetermined number of plural pixels, among a large number of pixels constituting the image, to each pixel group;
(b) causing at least a plurality of the pixel groups to have different relations between the image data of each pixel group and number of dots to be created in the pixel group, and specifying number of dots to be created in each pixel group according to the image data of the pixel group; and
(c) supplying dot number data representing the number of dots specified with regard to each pixel group as the control data to said image output device.

24. An image output control program that is executed by a computer to make image data subjected to a preset series of image processing, create dots according to a result of the preset series of image processing, and thereby output an image,
said image output control program causing the computer to attain:
a first function of collecting a predetermined number of plural pixels, among a large number of pixels constituting the image, to each pixel group and specifying number of dots to be created in each pixel group according to the image data;
a second function of selecting a priority order of pixels for dot formation in each pixel group;
a third function of determining position of each dot-on pixel included in each pixel group, based on the specified number of dots and the selected priority order of the pixel group; and
a fourth function of actually creating a dot at the determined position of each dot-on pixel.

25. An image output control program in accordance with claim 24, wherein said first function refers to a dither matrix, which maps threshold values to respective pixels arranged in a two-dimensional array, and specifies the number of dots to be created in each pixel group, and
said second function divides the dither matrix referred to for the dot number specification into multiple groups corresponding to multiple pixel groups, specifies a priority order of pixels in each pixel group based on a result of comparison between the image data of respective pixels included in the pixel group and corresponding threshold values, and stores the specified priority orders of the multiple pixel groups,
said second function selecting one priority order corresponding to a position of each pixel group in the image, among multiple priority orders stored with regard to the multiple groups of the dither matrix.

26. An image output program that is executed by a computer to receive processed image data, which has gone through a preset series of image processing, create dots according to the received image data, and thereby output an image, said image output program causing the computer to attain the functions of:
(A) receiving dot number data representing number of dots to be created in each pixel group, as the image data, where the pixel group includes a predetermined number of plural pixels collected among a large number of pixels constituting the image;
(B) selecting a priority order of pixels for dot formation in each pixel group;
(C) determining position of each dot-on pixel included in each pixel group, based on the received dot number data and the selected priority order; and
(D) actually creating a dot at the determined position of each dot-on pixel.

27. An image processing program that is executed by a computer to make input image data representing an image subjected to a preset series of image processing and thereby generate control data, which is used for control of dot formation by an image output device that creates dots and outputs a resulting processed image, said image processing program causing the computer to attain the functions of:
(a) collecting a predetermined number of plural pixels, among a large number of pixels constituting the image, to each pixel group;
(b) causing at least a plurality of the pixel groups to have different relations between the image data of each pixel group and number of dots to be created in the pixel group, and specifying number of dots to be created in each pixel group according to the image data of the pixel group; and
(c) supplying dot number data representing the number of dots specified with regard to each pixel group as the control data to said image output device.

28. An image output control system comprising an image processing device that makes image data subjected to a preset series of image processing and an image output device that creates dots according to a result of the preset series of image processing to output an image,
said image processing device comprising:
a pixel group setting module that collects a predetermined number of plural pixels, among a large number of pixels constituting the image, to each pixel group;
a dot number specification module that causes at least a plurality of the pixel groups to have different relations between the image data of each pixel group and number of dots to be created in the pixel group, and specifies number of dots to be created in each pixel group according to the image data of the pixel group; and
a number data supply module that supplies dot number data representing the number of dots specified with regard to each pixel group as the control data to said image output device,
said image output device comprising:
a number data receiving module that receives the dot number data with regard to each pixel group;
a pixel position determination module that determines position of each dot-on pixel in each pixel group, based on the received dot number data; and
a dot formation module that actually creates a dot at the determined position of each dot-on pixel.

29. An image output control method that makes image data subjected to a preset series of image processing and creates dots according to a result of the preset series of image processing to output an image,
said image output control method comprising:
a first step of collecting a predetermined number of plural pixels, among a large number of pixels constituting the image, to each pixel group;
a second step of causing at least a plurality of the pixel groups to have different relations between the image data of each pixel group and number of dots to be created in the pixel group, and specifying number of dots to be created in each pixel group according to the image data of the pixel group;
a third step of determining position of each dot-on pixel in each pixel group, based on the specified number of dots; and
a fourth step of actually creating a dot at the determined position of each dot-on pixel.

30. An image output control system comprising an image processing device that makes image data subjected to a preset series of image processing and an image output device that creates dots according to a result of the preset series of image processing to output an image,
said image processing device comprising:
a number specification unit that collects a predetermined number of plural pixels, among a large number of pixels constituting the image, to each pixel group and specifies number of dots to be created in each pixel group according to the image data; and
a data transmitter that supplies dot number data representing the number of dots specified with regard to each pixel group to said image output device,
said image output device comprising:
a data receiver that receives the dot number data with regard to each pixel group;
a selector that selects a priority order of pixels for dot formation in each pixel group;
an operator that determines position of each dot-on pixel included in each pixel group, based on the received dot number data and the selected priority order; and
a dot formation unit that actually creates a dot at the determined position of each dot-on pixel.

31. An image output device that receives processed image data, which has gone through a preset series of image processing, and creates dots according to the received image data to output an image, said image output device comprising:
a data receiver that receives dot number data representing number of dots to be created in each pixel group, as the image data, where the pixel group includes a predetermined number of plural pixels collected among a large number of pixels constituting the image;
a selector that selects a priority order of pixels for dot formation in each pixel group;
an operator that determines position of each dot-on pixel included in each pixel group, based on the received dot number data and the selected priority order; and
a dot formation unit that actually creates a dot at the determined position of each dot-on pixel.

32. An image processing device that causes input image data representing an image to go through a preset series of image processing and thereby generates control data, which is used for control of dot formation by an image output device that creates dots and outputs a resulting processed image, said image processing device comprising:
a generator that collects a predetermined number of plural pixels, among a large number of pixels constituting the image, to each pixel group;
a number specification unit that causes at least a plurality of the pixel groups to have different relations between the image data of each pixel group and number of dots to be created in the pixel group, and specifies number of dots to be created in each pixel group according to the image data of the pixel group; and
a data transmitter that supplies dot number data representing the number of dots specified with regard to each pixel group as the control data to said image output device.

33. An image processing device that causes input image data representing an image to go through a preset series of image processing and thereby generates control data, which is used for control of dot formation by an image output device that creates dots and outputs a resulting processed image, said image processing device comprising:
a memory that stores a dither matrix, which maps threshold values to respective pixels arranged in a two-dimensional array;
a generator that collects a predetermined number of plural pixels, among a large number of pixels constituting the image, to each pixel group;
a comparator that compares the image data of respective pixels included in each pixel group with threshold values set at corresponding positions in the dither matrix stored in said memory;
a number specification unit that specifies number of dots to be created in the pixel group, based on a result of the comparison; and
a data transmitter that supplies dot number data representing the number of dots specified with regard to each pixel group as the control data to said image output device.
